# EUROPEAN PATENT SPECIFICATION

(11) **EP 1 936 163 B1**
(45) Date of publication and mention of the grant of the patent: **13.07.2011**
(21) Application number: 06127157.3
(22) Date of filing: 22.12.2006
(51) Int. Cl.: F02D 41/02

(54) **An engine system and an exhaust gas treatment device regeneration method**
Motorsystem und Verfahren zur Regeneration einer Abgasbehandlungsvorrichtung
Système de moteur et procédé de régénération d'un dispositif de traitement des gaz d'échappement

(43) Date of publication of application: 25.06.2008
(73) Proprietor: Ford Global Technologies, LLC, Dearborn, MI 48126 (US)
(72) Inventor: Hermansson, Jonas, SE-437 32, LINDOME (SE); Vollmer, Niklas, SE-430 31, ÅSA (SE); Johnsson, Anders, SE-416 55, GÖTEBORG (SE)
(74) Representative: Holmberg, Magnus

(56) References cited:
- EP-A1- 1 154 130
- WO-A-2005/040571
- DE-A1- 10 326 889

## Description

### TECHNICAL FIELD

The present invention relates to a method for an exhaust gas treatment device in an engine system comprising an internal combustion engine comprising at least one cylinder, a lambda value of a mixture of air and fuel provided in at least one of the cylinders being controllable by control of air flow control means and/or fuel injection means of the engine. The invention also relates to an engine system comprising an internal combustion engine comprising at least one cylinder.

### BACKGROUND

Modern vehicles are equipped with exhaust gas treatment devices, known as catalytic converters, that convert toxic gases such as hydrocarbons (HC), carbon monoxide (CO) and nitrogen oxides (NOx) into substances such as carbon dioxide (CO2), nitrogen (N2) and water (H2O). A known problem with catalytic converters is that certain substances can remain, for example by physical or chemical adsorption, on internal surfaces of the converters, and reduce the capacity of the converters. Such detrimental adsorption is known as catalytic converter poisoning. For example, fuels, whether gasoline or diesel, for vehicle internal combustion engines, contain a relatively high amount of sulfur, typically depending on in which state or region they are provided. The sulfur creates problems for the operation of the catalyst exhaust gas treatment devices. In the engine combustion process, the sulfur is converted to sulfur oxides (SOx), which adsorbs strongly to internal surfaces of the catalyst and therefore reduces its exhaust gas treatment capacity. This process is often referred to as sulfur poisoning. Sulfur adsorption is particularly strong during low load driving conditions.

A number of catalytic converter regeneration measures to solve this problem have been suggested. It is well known that the catalytic converter can be restored from sulfur poisoning by being exposed to high temperatures. The patent publication US6161377 suggests heating the catalytic converter by introducing secondary air into the exhaust gases, combined with providing a rich mixture to the cylinders. The patent publication US6901749 discloses, in order to heat the catalytic converter, providing a rich mixture to the engine cylinders combined with adjusting the ignition timing so as to provide a relatively late ignition during the engine cycles.

Each of the known measures is suitable for use in a certain limited area of the engine operation range. The output torque requested by a vehicle driver, the engine temperature, and the engine rotational speed are examples on parameters that each should be within preferred intervals for a certain known catalytic converter regeneration measure to deliver the desired result without interfering with vehicle drivability and not to cause degradation of any other performance characteristic of the engine. There is therefore a need to provide regeneration for the catalytic converter, that is more flexible with regard to the engine operation.

WO2005/040571 discloses an exhaust purification device of compression ignition type internal combustion engine.

### SUMMARY OF THE INVENTION

It is an object of the present invention to provide optimum efficiency of an exhaust gas treatment device.

It is also an object of the present invention to improve regeneration of exhaust gas treatment devices in engine systems with internal combustion engines.

It is also an object of the present invention to improve the flexibility of providing an effective regeneration of an exhaust gas treatment device in an engine system, in a large number of operational states of the engine system.

These objects are reached with a method of the type mentioned initially, according to a first aspect of the invention, comprising performing an exhaust gas treatment device regeneration, comprising a first regeneration stage comprising controlling the engine system so as to increase the temperature of the exhaust gas treatment device, and a second regeneration stage, following the first regeneration stage, the first regeneration stage providing a preparation for the second regeneration stage in the form of increasing the temperature of the exhaust gas treatment device, the second regeneration stage comprising repetitively performing regeneration steps comprising controlling the lambda value so as to become lower than 1 and controlling the lambda value so as to become higher than 1.

The second regeneration stage is especially effective when the temperature of the exhaust gas treatment device is relatively high. Therefore, in cases where poisoning of the exhaust gas treatment device is detected, and the exhaust gas treatment device temperature is relatively low, the first regeneration stage will provide an advantageous preparation for the second regeneration stage in increasing the temperature. Also, the high temperature provided at the first regeneration stage will in itself provide a regenerative effect of the exhaust gas treatment device.

The second regeneration stage will provide a variation of the lambda value, and therefore a variation of the oxygen content of exhaust gases, so that alternating rich and lean conditions are created in the exhaust gas treatment device. At sulfur poisoning, this will provide a quicker sulfur release in the exhaust gas treatment device, since certain sulfur compounds releases from certain catalyst components more easily in rich conditions, while other sulfur compounds releases from other catalyst components more easily in lean conditions. (The report "Interaction of Sulfur with Automotive Catalysts and the Impact on Vehicle Emissions - A Review", by Timothy J. Truex, (SAE Technical Paper Series 1999-01-1543), provides closer information on how different sulfur compounds interact with several catalyst components.)

Thus, the sequence of the first and second regeneration stage will provide a regeneration which is quicker than known regenerations relying solely on a high exhaust gas treatment device temperature for the regeneration. This is very advantageous especially in vehicle application, where the operational conditions for the engine system can change quickly and the "time windows" for performing the regeneration can be short.

The second regeneration stage makes use of the fact that sulfur deposits in the first exhaust gas treatment device releases during a rich air/fuel ratio. By repetitively controlling the lambda value so as to become lower than 1, a rich air/fuel mixture is periodically provided, resulting in an effective sulfur regeneration. Also, besides sulfur, the invention is also useful for reducing other substances, such as nitrogen oxides (NOx). In addition, the second regeneration stage provides a "gentle"'' regeneration of the exhaust gas treatment device, which does not affect properties such as the available torque of the engine, or noise, vibration and harshness (NVH) in a vehicle in which the engine system is provided.

Preferably, the method comprises determining a temperature of the exhaust gas treatment device, and performing the second regeneration stage if the exhaust gas treatment device temperature is above a first temperature threshold value. Thereby, the method could comprise determining a value of at least one condition parameter related to the operational condition of the engine system, selecting, at least partly based on the value of the at least one condition parameter, for the first regeneration stage an exhaust gas treatment device regeneration measure out of at least two exhaust gas treatment device regeneration measures. Selecting, based on the condition parameter, and upon detection that the exhaust gas treatment device is subjected to poisoning, one regeneration measure out of the at least two regeneration measures, the timing of the regeneration will be less dependent on the operational state of the engine system. This will improve the flexibility of providing an effective regeneration of an exhaust gas treatment device.

Preferably, where the engine comprises at least two cylinders, one of the condition parameters is a control parameter corresponding to, or being related to a requested torque (RT) of the engine. This will allow a selection of regeneration measures s that temporary torque requirements can be met.

For example, one of the exhaust gas treatment device regeneration measures can comprise inhibiting combustion in all cylinders, and controlling the fuel injection means so that fuel is allowed into at least one of the cylinders, and another of the exhaust gas treatment device regeneration measures comprises inhibiting combustion in at least one but fewer than all of the cylinders, and controlling the fuel injection means so that fuel is allowed into at least one of the cylinders in which combustion is inhibited. The latter regeneration measure allows at least one cylinder to be used for creating the torque required.

Preferably, where the engine comprises at least two cylinders, one of the condition parameters is the engine rotational speed, and one of the exhaust gas treatment device regeneration measures comprises inhibiting combustion in at least one but fewer than all of the cylinders, and controlling the fuel injection means so that fuel is allowed into at least one of the cylinders in which combustion is inhibited. Thereby, the regeneration measure, comprising inhibiting combustion in less than all of the cylinders to meet torque requirements, can be allowed only if the engine speed is above an engine speed threshold value, so as to be used only during the most favorable circumstances from a NVH and drivability point of view.

Preferably, the engine system further comprises a downstream gas sensor, located downstream of, or at least partly within, the exhaust gas treatment device, and the repeated regeneration steps of the second regeneration stage comprises
- detecting, based on signals from the downstream gas sensor, a decrease of the oxygen content downstream of or within the exhaust gas treatment device, and
- controlling, in dependence of the detection of the decrease of the oxygen content, the lambda value so as to increase.

The detection of the oxygen content downstream of the exhaust gas treatment device, and the control, based on this detection, so as to increase the lambda value, provide for safeguarding that emission levels are kept under control. The downstream gas sensor can be in the form of a traditional narrowband oxygen sensor, and the invention does not require any special components, beside those usually provided in modern engine systems. Thus, an effective regeneration of the exhaust gas treatment device can be provided with no increase in the complexity of the engine system.

Preferably, the step of controlling the lambda value so as to increase is performed at the end of a low oxygen time interval following the detection of the decrease of the oxygen content. Thereby, the low lambda condition is allowed to continue, after an oxygen content decrease detection, during the low oxygen time interval. Thereby, the amount of gases produced by a rich air/fuel mixture, and transported through the exhaust gas treatment device during each of the repeated steps of the regeneration can be increased. This is advantageous especially during high levels of sulfur poisoning.

Preferably, the method comprises determining an air flow to the at least one cylinder, the low oxygen time interval being at least partly dependent upon the air flow. Preferably, the low oxygen time interval is adjusted, based at least partly on the air flow.

Preferably, the repeated regeneration steps of the second regeneration stage comprises
- detecting, based on signals from the downstream gas sensor, an increase of the oxygen content downstream of or within the exhaust gas treatment device, and
- controlling, in dependence of the detection of the increase of the oxygen content, the lambda value so as to decrease.

The detection of the oxygen content downstream of the exhaust gas treatment device, and the control, based on this detection, so as to increase and decrease the lambda value at a low and high exhaust gas oxygen content, respectively, provide for safeguarding that emission levels are kept under control. In addition, with such an alternating lambda value, an effective exhaust gas treatment device regeneration is provided with none or only a small increase in the fuel consumption of a vehicle provided with the exhaust gas treatment device.

Preferably, the repeated regeneration steps are carried out so that the lambda value oscillates around 1.

Preferably, the step of controlling the lambda value so as to decrease is performed at the end of a high oxygen time interval following the detection of the increase of the oxygen content. Thereby, the high lambda condition is allowed to continue, after an oxygen content increase detection, during the high oxygen time interval. Thereby, the amount of gases produced by a lean air/fuel mixture, and transported through the exhaust gas treatment device during each of the repeated steps of the regeneration can be increased.

Tests have shown that allowing time intervals with high and low oxygen contents downstream of the exhaust gas treatment device, provides for an effective regeneration measure. The time intervals with a rich mixture provides for an effective sulfur regeneration, and the time intervals with a lean mixture provides for release of other substances, such as hydrogen sulfides (H2S), by oxidation to sulfur dioxide (SO2). More generally, the exhaust gas treatment device is "cleaned out" by the alternating lambda value.

Preferably, the method comprises determining an air flow to the at least one cylinder, the high oxygen time interval being at least partly dependent upon the air flow. Preferably, the high oxygen time interval is adjusted based at least partly on the air flow.

Preferably, the exhaust gas treatment device is a first exhaust gas treatment device, and the engine system comprises a second exhaust gas treatment device located downstream of the first exhaust gas treatment device. Thereby, the second exhaust gas treatment device can be located downstream of the downstream gas sensor. The second exhaust gas treatment device serves as a buffer for any emissions released from the first exhaust gas treatment device during its regeneration, specially due to the high and low oxygen time intervals. Thereby, it is possible to provide the effective regeneration of the first exhaust gas treatment device with no increase in emissions from the engine system. However, it should be noted that the regeneration of the first exhaust gas treatment device can also be carried out in an engine system not presenting any further exhaust gas treatment device downstream of the first exhaust gas treatment device.

Preferably, the first regeneration stage comprises a fuel injection exhaust gas treatment device regeneration measure comprising inhibiting combustion in the at least one cylinder, and controlling the fuel injection means so that fuel is allowed into at least one of the cylinders.

By allowing fuel injection while combustion is inhibited, the fuel can be thoroughly mixed with air in the cylinder(s). The long transportation after the cylinder(s) allows additional mixture of the air and fuel before reaching the catalytic converter. This provides a homogonous distribution of fuel and air across the lateral extensions of the catalytic converter, in which the mixture is combusted so as to heat the exhaust gas treatment device. The result is a very quick temperature increase of the exhaust gas treatment device, while the risks of the regeneration measure causing damage to the catalytic converter are minimized. This is provided simply by use of the fuel injection means, without the need for additional equipment in the engine system.

Also, inhibiting combustion in the at least one cylinder, and controlling the fuel injection means so that fuel is allowed into at least one of the cylinders, can in itself provide a very effective regeneration.

Also, this regeneration measure may be carried out without causing disturbance to drivers and passengers in a vehicle provided with the engine system, In addition, the regeneration measure does not lead to any vibration in a vehicle, in which it is used. More generally, use of the regeneration measure does not lead to any deterioration in the noise, vibration and harshness (NVH) performance of the vehicle. Also, since the energy for heating the catalytic converter is transported chemically, i.e. in the air/fuel mixture, and converted to thermal energy in the catalytic converter, there are essentially no energy losses between the engine and the catalytic converter. Thus, the regeneration measure is very effective, even in a case where the catalytic converter is provided relatively far from the engine, and/or in the case of the engine system being equipped with a exhaust turbo charger.

The use of fuel injection while combustion is inhibited for heating the exhaust gas treatment device is advantageous for low load conditions, at which the exhaust gas treatment device temperature is relatively low, and sulfur adsorption in particularly strong.

Preferably, the step of inhibiting combustion comprises controlling ignition means at the cylinder so that combustion is inhibited. Thereby, the method is adapted to spark ignition engines, at which ignition is inhibited during at least one operative cycle of the cylinder(s) during which cycle fuel is allowed to the cylinder, which allows after-combustion of the air/fuel mixture, i.e. allows it to pass the cylinder(s) and the exhaust manifold, and to be combusted in the exhaust gas treatment device.

Alternatively or in addition to ignition inhibition, the combustion inhibition could comprise controlling at least one exhaust valve at at least one of the cylinders into which fuel is allowed so as to reduce or eliminate an increase in pressure in the cylinder. Thereby, a valve control system, in itself known to the person skilled in the art, can be used to open the exhaust valve(s) when at a compression stroke of the cylinder the piston is moving from the bottom dead centre to the top dead centre.

Preferably, the fuel injection exhaust gas treatment device regeneration measure is performed if the existence of at least one condition indicative of a fuel injection inhibition is determined. Thereby, the regeneration measure is performed during a fuel cut mode of the engine, for example caused by an accelerator pedal being released by a driver of a vehicle in which the method is used. This makes it possible to provide a timing of the regeneration measure, at which it does not in any way interfere with other aspects of the engine operation. In a vehicle, performing the fuel injection exhaust gas treatment device regeneration measure in situations in which there is normally a fuel cut provides a simple and effective regeneration measure, that may be carried out without causing disturbance to drivers and passengers. Further, the fuel injection exhaust gas treatment device regeneration measure does not compromise output torque requirements during the vehicle operation. In other words, the available torque of the engine is not affected.

It should be noted that the existence of the at least one condition indicative of a fuel injection inhibition can be determined in a variety of manners. For example, the condition can correspond to a fuel injection control parameter corresponding to no fuel injection, an accelerator pedal setting signal corresponding to a released accelerator pedal, or a requested torque parameter value corresponding to zero (or negative) requested torque. In general, any parameter related to the fuel injection control can be used to determine the condition indicative of a fuel injection inhibition. Also, the condition can be determined before a fuel cut period has commenced, for example where a released accelerator pedal signal is used as the condition, or after a fuel cut period has commenced, for example where a fuel injection control parameter corresponding to no fuel injection is used as the condition indicative of a fuel injection inhibition.

For instance, if the requested torque in a vehicle is at or below a threshold value, usually a fuel cut mode, in which the fuel injection is inhibited, follows. Thus, according to one embodiment, the step of determining the existence of a condition, indicative of a fuel injection inhibition, comprises determining a value of a control parameter corresponding to, or being related to a requested torque of the engine, and comparing the determined control parameter value with a control parameter threshold value, the determination of the existence of a condition indicative of a fuel injection inhibition, being dependent on the comparison between the determined control parameter value and the control parameter threshold value. Preferably, it is determined that the fuel injection means are not controlled so as to inhibit fuel injection if the requested torque is above the requested torque threshold value. Usually, a zero or a negative requested torque, for example caused by an accelerator pedal being released by a driver of a vehicle in which the method is used, is followed by a fuel cut mode in which the fuel injection is inhibited. Thus, in one embodiment, the requested torque threshold value is zero.

In case the fuel injection exhaust gas treatment device regeneration measure is applicable to engines in which the fuel injection can be controlled individually for each cylinder, and where the engine comprises at least two cylinders, the method can comprise determining the temperature of the exhaust gas treatment device, the number of cylinders into which fuel is allowed while combustion is inhibited being dependent on the temperature of the exhaust gas treatment device. Also, the method can comprise determining the temperature of the exhaust gas treatment device, the amount of fuel allowed into the at least one of the cylinders, in which combustion is inhibited, being controlled in dependence on the temperature of the exhaust gas treatment device.

Preferably, the method comprises controlling air flow control means so as to control the combustion in the exhaust gas treatment device during the fuel injection exhaust gas treatment device regeneration measure. By adjusting the air flow, for example based on the flow of fuel injected, it can be secured that a combustible air/fuel mixture is provided to the catalytic converter during the regeneration action. Also, controlling the combustion in the exhaust gas treatment device could comprise controlling a location or a region of a maximum temperature in the exhaust gas treatment device. Thereby, as explained closer below, the air flow control means, for example comprising a throttle valve, can be used to control the temperature distribution in a longitudinal direction of the catalytic converter. By changing, during the sulfur regeneration, the location of the maximum temperature, it can be secured that the temperature is increased sufficiently throughout the entire catalytic converter. Also, moving the maximum temperature in this way further reduces the risk of damaging the catalytic converter by high temperature exposure. Specially, the risk of excessive temperatures in an upstream end of the catalytic converter can be substantially reduced, so that catalytic converter damage can be effectively avoided.

Preferably, the first regeneration stage comprises a combustion inhibition exhaust gas treatment device regeneration measure, comprising inhibiting combustion in at least one of the cylinders, and controlling the fuel injection means so that fuel is allowed into at least one of the cylinders in which combustion is inhibited. Preferably, the step of inhibiting combustion comprises controlling ignition means at the cylinder so that combustion is inhibited.

Preferably, the method comprises determining, during the combustion inhibition exhaust gas treatment device regeneration measure, a value of a control parameter corresponding to, or being related to a requested torque of the engine, the combustion inhibition exhaust gas treatment device regeneration measure being dependent on the control parameter value determination. Thereby, the combustion inhibition exhaust gas treatment device regeneration measure can be adjusted, for example as described below, to allow the engine to deliver the torque requested. This makes it possible to quickly respond to torque requests based on accelerator pedal maneuverings.

Preferably, where the internal combustion engine comprises at least two cylinders, the number of cylinders in which combustion is inhibited is dependent on the control parameter value determination. Thereby, the combustion inhibition exhaust gas treatment device regeneration can be adjusted while being effected, so that it can continue while at the same time torque requirements within certain limits can be met. This is of great advantage in many vehicle operational situations, for example during extended periods of low torque requirements without fuel cut situations. Such conditions can occur for example where the vehicle is traveling for an extended period of time at a relatively low speed on a road with small or no variations in altitude, and the accelerator pedal is kept relatively still. This advantageous embodiment allows for combustion to take place in some of the cylinders to meet torque requirements, while the other cylinders are used for the combustion inhibition exhaust gas treatment device regeneration.

Preferably, where the engine system further comprises fuel storage means, and a fuel vapor retainer, the first regeneration stage comprising a purge gas exhaust gas treatment device regeneration measure, comprising allowing purge gas from the fuel vapor retainer into at least one of the cylinders, and inhibiting combustion in at least one of the cylinders into which purge gas is allowed.

By using purge gas from a fuel vapor retainer, air and fuel can be introduced into the inlet manifold mixed, and be thoroughly mixed with air in the cylinder(s), and be further mixed between the cylinder(s) and the catalytic converter. This provides a homogonous distribution of fuel and air across the lateral extensions of the catalytic converter, in which the mixture is combusted so as to heat the exhaust gas treatment device.

Preferably, the step of inhibiting combustion comprises controlling ignition means at the cylinder so that combustion is inhibited. Preferably, where the engine comprises fuel injection means, the purge gas exhaust gas treatment device regeneration measure is performed if the existence of at least one condition indicative of a fuel injection inhibition is determined. Preferably, the step of determining the existence of at least one condition indicative of a fuel injection inhibition, comprises determining a requested torque of the engine, and comparing the determined requested torque with a requested torque threshold value, the determination of the existence of at least one condition indicative of a fuel injection inhibition, being dependent on the comparison between the determined requested torque and the requested torque threshold value. Preferably, the method comprises estimating the contents of fuel in the fuel vapor retainer and determining, based on the estimation of the contents of fuel in the fuel vapor retainer, whether to perform the purge gas exhaust gas treatment device regeneration measure. Preferably, the method comprises controlling air flow control means so as to control the combustion in the exhaust gas treatment device during the purge gas exhaust gas treatment device regeneration measure. Also, controlling the combustion in the exhaust gas treatment device could comprise controlling a location or a region of a maximum temperature in the exhaust gas treatment device. Preferably, allowing purge gas from the fuel vapor retainer into at least one of the cylinders comprises controlling valve means so as to allow purge gas from the fuel vapor retainer to reach the engine.

The objects are also reached with an engine system according to any of the claims 28-54.

### DESCRIPTION OF THE FIGURES

Below, the invention will be described in detail with reference to the drawings, in which
- fig. 1 shows a schematic view of parts of a vehicle engine system, according to a preferred embodiment of the invention,
- fig. 2 shows a block diagram depicting a method according to a preferred embodiment of the invention,
- fig. 3 is a diagram mapping catalytic converter regeneration actions to the engine speed (S) and the catalytic converter temperature (Teat), according to the preferred embodiment of the invention,
- fig. 4 shows a schematic view of parts of a vehicle engine system, according to an alternative embodiment of the invention,
- fig. 5 shows a block diagram depicting a method according to an alternative embodiment of the invention,
- fig. 6 is a diagram mapping catalytic converter regeneration actions to the engine speed (S) and the catalytic converter temperature (Tcat), according to the alternative embodiment of the invention,
- fig. 7 shows a schematic view of parts of a vehicle engine system, according to a further embodiment of the invention,
- fig. 8 is a block diagram showing a method according to a special embodiment of the invention,
- fig. 9 is a block diagram showing a method according to a further embodiment of the invention,
- fig. 12 shows a schematic view of a portion of a vehicle engine system according to an alternative embodiment of the invention, and
- fig. 13 is a schematic side view of a detail in fig. 1 with temperature distribution curves.

### DETAILED DESCRIPTION

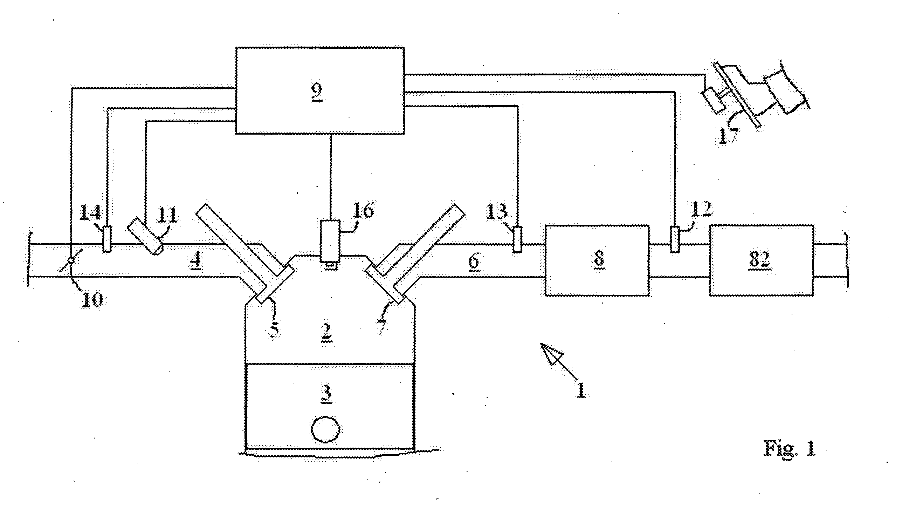

Fig. 1 shows a schematic view of parts of a vehicle engine system 1 comprising an internal combustion engine. The engine comprises four cylinders 2, of which only one is shown in fig. 1, each with a reciprocating piston 3. It should be noted that the invention is applicable to engines with any number of cylinders. Communication between each cylinder 2 and an inlet duct 4 is controlled by at least one respective inlet valve 5, and communication between each cylinder 2 and an exhaust duct 6 is controlled by at least one respective exhaust valve 7. Downstream from the cylinders 2, an exhaust gas treatment device 8, in this presentation referred to as a first exhaust gas treatment device 8 or a first catalytic converter 8, is provided. Downstream from the first exhaust gas treatment device 8, a second exhaust gas treatment device 82, here also referred to as a second catalytic converter 82, is provided.

The engine system 1 also comprises an engine control unit (ECU) 9, which can be provided as one unit, or as more than one logically interconnected physical units. The ECU 9 is adapted to control air control means 10 comprising a throttle valve 10 in the inlet duct 4. As an alternative to, or in addition to a throttle valve 10, the air flow control means can comprise control means (not shown) for the inlet valve(s) 5 and/or the exhaust valve(s) 7, for example in the form of a variable valve timing (VVT) system and/or a cam profile shifting (CPS) system. Such inlet and/or exhaust valve control means can be used as an alternative or in addition to the throttle valve 10 for controlling the admission of air to the cylinder(s).

The ECU 9 is also adapted to control fuel injection means 11 comprising at least one fuel injector 11 in the inlet duct 4. In this embodiment, where the engine presents more than one cylinder, the fuel injection can be controlled individually for each cylinder, by a fuel injector being provided at a separate portion of the inlet duct 4 communicating with the respective cylinder, (so called port fuel injection). Alternatively, as is known in the art, a fuel injector can be provided in each cylinder 2, (so called direct fuel injection). As a further alternative, one single fuel injector can be provided for more than one cylinder, or all cylinders, for example at an upstream portion of the inlet duct communicating with more than one cylinder, or all cylinders. The fuel injection means 11 communicate with fuel storage means in the form of a fuel tank 20, via a fuel pump 21.

The ECU 9 is also adapted to receive signals from a downstream gas sensor 12 located downstream of the first catalytic converter 8, as well as from an upstream gas sensor 13 located in the exhaust duct 6 between the cylinders 2 and the catalytic converter 8. The downstream gas sensor 12 is located upstream of the second catalytic converter 82. Alternatively, the downstream gas sensor 12 can be located at least partly within the first catalytic converter 8, preferably in a downstream portion thereof. It should be noted that as a further alternative, the downstream gas sensor 12 can be located at least partly within the second catalytic converter 82.

The gas sensors are provided in the form of lambda or oxygen sensors. In this example, the downstream gas sensor 12 is a so called narrowband (binary) oxygen sensor, giving a highly non-linear relationship between the oxygen content of the exhaust gas, (indicative of the lambda value), and the output signal voltage. The upstream gas sensor 13 is a wideband (linear) sensor, giving a more linear relationship between the exhaust gas oxygen content, (indicative of the lambda value), and the output signal voltage.

In addition, the ECU 9 is also adapted to determine the engine air flow based on signals received from an air flow sensor 14 located in the inlet duct 4. As an alternative, as is known in the art, the air flow can be computed based on parameters such as the inlet manifold pressure, throttle position, engine speed, inlet temperature, and atmospheric pressure. Manners of determining the values of these parameters are known in the art, and not explained further here.

The ECU 9 is adapted to determine, based on the signals from the downstream and upstream sensors 12, 13, the oxygen content in the exhaust gases upstream and downstream, respectively, of the first catalytic converter 8. The ECU 9 is also adapted to control, based partly on signals from the upstream gas sensor 13, and by suitable control of the throttle valve 10 and/or the fuel injection means 11, the lambda value of a mixture of air and fuel provided in the cylinder(s).

The ECU 9 is adapted to determine the temperature of the first catalytic converter 8 based at least partly on the air flow, the lambda value, the ambient temperature, engine load, and engine rotational speed. As an alternative, the ECU 9 can be adapted to receive signals from a temperature sensor located in the exhaust duct 6 between the cylinders 2 and the first catalytic converter 8, based on which signals, the catalytic converter temperature can be determined.

Further, at each cylinder, ignition means 16 comprising a spark plug 16 are provided and controllable individually by the ECU 9. However, the invention is also applicable to internal combustion engines with non-spark ignition, such as diesel or HCCI (Homogenous Charge Combustion Ignition) engines.

The ECU is adapted to adjust, as known in the art, the value of a value of a control parameter in the form of a requested torque parameter RT based on signals from an accelerator pedal 17 in the vehicle.

The ECU 9 is adapted to determine, based at least partly on an analysis of a signal from the first gas sensor 12, the level of sulfur poisoning of the first catalytic converter 8, and whether the first catalytic converter 8 is subjected to sulfur poisoning, as described in the European patent application entitled "An internal combustion engine system and a method for determining a condition of an exhaust gas treatment device in a such a system", filed by the applicant on the first filing date of the present application, and incorporated herein by reference.

Alternatively, the ECU 9 can be adapted to determine the level of sulfur poisoning of the first catalytic converter, and whether the first catalytic converter 8 is subjected to sulfur poisoning, by some alternative method. For example, a sulfur poisoning establishment procedure can include adjusting in the ECU 9 a sulfur oxide (SOx) adsorption counter, based on air-fuel ratio, engine operating condition, catalyst temperature, the engine rotational speed and the intake pressure.

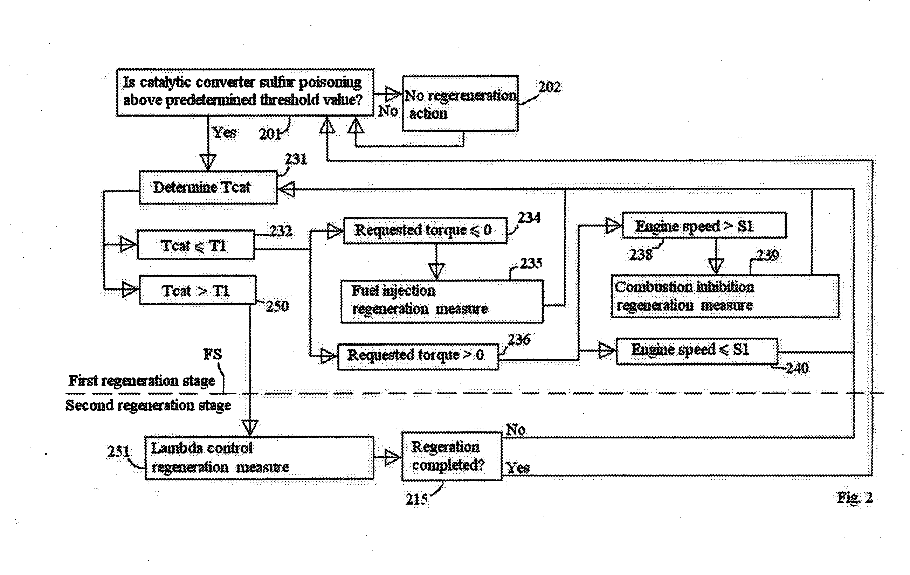

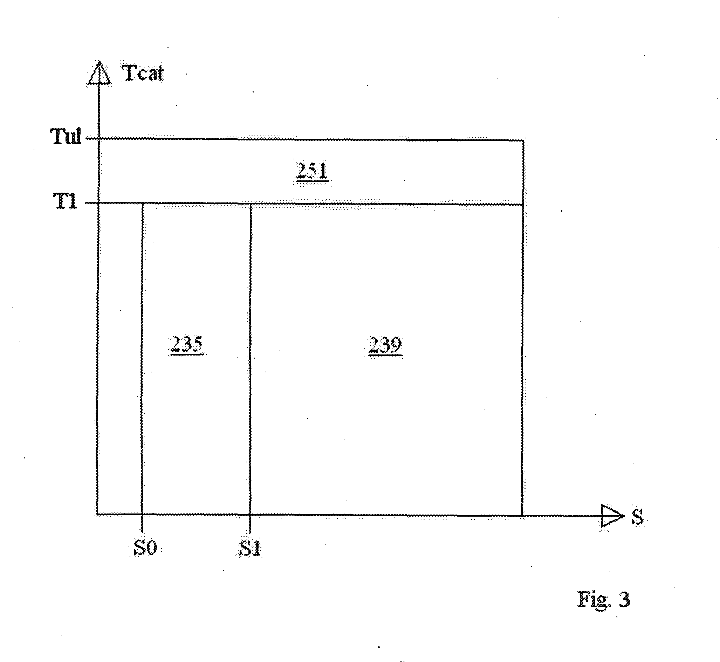

A method according to a preferred embodiment of the invention will now be described with reference to fig. 2 and 3. The method can include a first and a second regeneration stage. In fig 2, a separation between the first and the second regenerations stages is illustrated with a broken line, FS.

The ECU 9 determines 201 whether data corresponding to the level of sulfur poisoning of the first catalytic converter 8 is above a predetermined sulfur poisoning threshold value. If it is determined that the data corresponding to the level of sulfur poisoning is not above the sulfur poisoning threshold value, it is determined 202 that no catalytic converter regeneration is initiated.

If it is determined that the data corresponding to the level of sulfur poisoning is above the sulfur poisoning threshold value, the temperature Tcat of the first catalytic converter 8 is determined 231.

If the first catalytic converter temperature Tcat is not above a first temperature threshold value T1, 232, and if the requested torque RT is not above zero 234, the first regeneration stage including a fuel injection exhaust gas treatment device regeneration measure 235, described further below, is initiated so as to increase the temperature of the first catalytic converter 8. The fuel injection exhaust gas treatment device regeneration measure 235 is described in the European patent application entitled "An engine system and a method for a fuel injection regeneration of an exhaust gas treatment device in a such a system", filed by the applicant on the first filing date of the present application, and incorporated herein by reference. In this embodiment, the fuel injection exhaust gas treatment device regeneration measure 235, herein also referred to as a fuel injection regeneration measure 235, comprises inhibiting ignition in all cylinders 2, and controlling the fuel injection means 11 so that fuel is allowed into at least one of the cylinders 2. By allowing fuel injection while ignition is inhibited, the fuel can be thoroughly mixed with air in the cylinders. The mixture is transported to the first catalytic converter 8, in which it is combusted so as to heat the first catalytic converter 8. The fuel injection regeneration measure 235 will also heat the second catalytic converter 82, as described further below.

During the fuel injection regeneration measure 235 the temperature of the first catalytic converter 8 is continuously monitored 231. As long as the first catalytic converter temperature Tcat is not above the first temperature threshold value T1, 232, and as long as the requested torque RT is not above zero 234, the fuel injection regeneration measure is continued 235.

Referring to fig. 3, if during the fuel injection regeneration measure 235 the engine speed falls below a minimum engine speed limit S0, the regeneration measure 235 is discontinued, by allowing ignition in the cylinders, in order to avoid the engine stopping to run.

If the requested torque RT is above zero 236, and the engine speed is higher than an engine speed threshold value S1, 238, (see also fig. 3) the first regeneration stage will comprise initiating a combustion inhibition exhaust gas treatment device regeneration measure 239 so as to increase the temperature of the first catalytic converter 8. In case the fuel injection regeneration measure 235 has been initiated, it will be discontinued if the combustion inhibition exhaust gas treatment device regeneration measure 239 is initiated.

The combustion inhibition exhaust gas treatment device regeneration measure 239 is described in the European patent application entitled "An engine system and a method for a combustion inhibition regeneration of an exhaust gas treatment device in a such a system", filed by the applicant on the first filing date of the present application, and incorporated herein by reference. In this embodiment, the combustion inhibition exhaust gas treatment device regeneration measure 239, herein also referred to as a combustion inhibition regeneration measure 239, comprises inhibiting ignition in at least one of the cylinders 2, but in fewer than all cylinders, and controlling the fuel injection means 11 so that fuel is allowed into at least one of the cylinders in which combustion is inhibited. This allows for combustion to take place in some of the cylinders to meet torque requirements, white the other cylinders are used for the exhaust gas treatment device regeneration measure. In at least some of the cylinders used for the regeneration measure, fuel is allowed to be thoroughly mixed with air, and the mixture is transported to the first catalytic converter 8, in which it is combusted so as to heat the first catalytic converter 8. The combustion inhibition regeneration measure 239 will also heat the second catalytic converter 82. By being allowed only if the engine speed is above the engine speed threshold value S1, the combustion inhibition regeneration measure 239 is used during the most favorable circumstances from a NVH and drivability point of view.

During the combustion inhibition regeneration measure 239 the temperature of the first catalytic converter 8 is continuously monitored 231. As long as the first catalytic converter temperature Tcat is not above the first temperature threshold value T1, 232, as long as the requested torque RT is above zero 236, and as long as the engine speed is higher than an engine speed threshold value S1, 238, the combustion inhibition regeneration measure 239 is continued. If the requested torque RT falls to not be above zero 234, the combustion inhibition regeneration measure 239 is discontinued, and instead the fuel injection regeneration measure 235 is initiated.

If the first catalytic converter temperature Teat is not above the first temperature threshold value T1, 232, the requested torque RT is above zero 236, and the engine speed is not higher than an engine speed threshold value S1, 240, the regeneration will not be carried out, or it will be discontinued, and the first catalytic converter temperature, the requested torque RT, and the engine speed will be monitored to determine conditions, as described here, suitable for the regeneration to be initiated or continued.

If the first catalytic converter temperature Tcat is not above the first temperature threshold value T1, 232, and if the requested torque RT is not above zero 234, the first regeneration stage including the initiation of the fuel injection regeneration measure is carried out 235 so as to increase the temperature of the first catalytic converter 8.

Thus, referring to fig. 3, at first catalytic converter temperatures Tcat not above the temperature threshold value T1, and at engine speed S above the engine speed threshold value S1, the combustion inhibition regeneration measure 239 is initiated, providing that the requested torque RT is above zero. At first catalytic converter temperatures Tcat not above the temperature threshold value T1, and at engine speed S not above the engine speed threshold value S1, the fuel injection regeneration measure 235 is initiated, providing that the requested torque RT is not above zero.

It should be noted that as an alternative to the requested torque, some other control parameter, related to the requested torque can be used as a basis for the determinations described above of selecting a regeneration measure, For example, the signal corresponding to the setting of the accelerator pedal, or a signal for controlling the fuel injection means 11 can be used instead of the requested torque, since they are both related to the latter.

Referring to fig. 2, when the first catalytic converter temperature Tcat is determined to have reached above the first temperature threshold value T1, 250, the first regeneration stage is discontinued, and the second regeneration stage including a lambda control exhaust gas treatment device regeneration measure 251 is carried out. The lambda control exhaust gas treatment device regeneration measure 251 is described in the European patent application entitled "A method for regeneration of an exhaust gas treatment device in an engine system and an engine system", filed by the applicant on the first filing date of the present application, and incorporated herein by reference. In this embodiment, the lambda control exhaust gas treatment device regeneration measure 251, herein also referred to as a lambda control regeneration measure 251, and described closer below, comprises repetitively performing regeneration steps comprising controlling the lambda value so as to become lower than 1 and controlling the lambda value so as to become higher than 1.

Thus, referring to fig. 3, at first catalytic converter temperatures Tcat above the temperature threshold value T1, the lambda control regeneration measure 251 is carried out. Preferably, the temperature threshold value T1 is 650-750°C, above which the lambda control regeneration measure 251 is especially effective.

During the lambda control regeneration measure 251 the temperature of the first catalytic converter 8 is continuously monitored 231. If the first catalytic converter temperature Tcat falls below the first temperature threshold value T1, 232, the lambda control regeneration measure 251 is discontinued, and the steps described above of the first regeneration stage are repeated. Thus, depending on the requested torque RT and the engine speed, the fuel injection regeneration measure 235, or the combustion inhibition regeneration measure 239 may be activated to again bring the first catalytic converter temperature above the first temperature threshold value T1, 250, in order to again activate the lambda control regeneration measure 251.

The ECU 9 can be adapted to terminate the regeneration when the level of sulfur poisoning has been reduced to a predetermined level. Thus, referring to fig. 2, during the lambda control regeneration measure 251, the level of sulfur poisoning of the first catalytic converter is determined 215. If it is determined 215 that the level of sulfur poisoning has been reduced to the predetermined level, the lambda control regeneration measure 251 is terminated.

As opposed to the regeneration measures 235, 239 of the first regeneration stage, the lambda control regeneration measure 251 results in no or only a relatively small increase in the first catalytic converter temperature Tcat. Therefore, referring to fig. 3, the change to the lambda control regeneration measure 251 above the first temperature threshold value T1 reduces significantly the risk of damages to the catalytic converter 8 due to the catalytic converter temperature Tcat exceeding an upper limit temperature Tul, typically for example about 800°C-900°C.

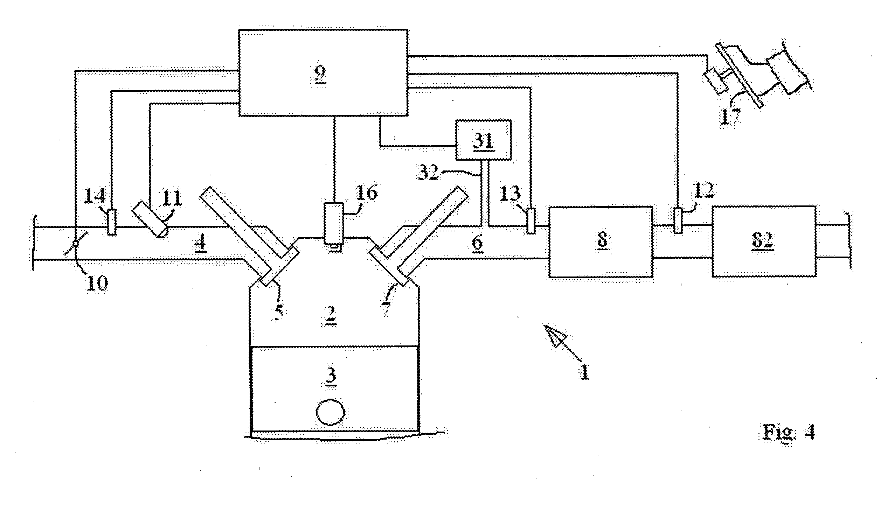

With reference to fig. 4 - fig. 6, a method according to an alternative embodiment of the invention will be described. Fig 4 shows a schematic view of parts of a vehicle engine system 1, presenting the same features as the engine system described above with reference to fig. 1, except for the following: The engine system depicted partly in fig. 4 comprises in addition an air pump 31, controllable by the ECU 9, and being adapted to communicate with the exhaust duct 6 via an air conduit 32. Thus, the ECU 9 is adapted to control the air pump 31 so as to selectively introduce air into the exhaust duct.

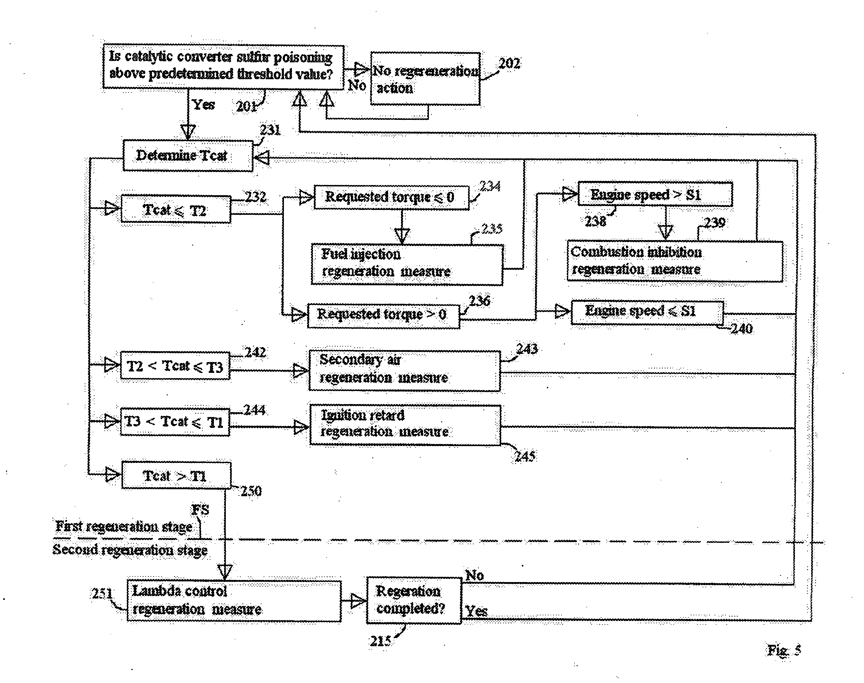

Referring to fig. 5, the method according to the alternative embodiment of the invention is similar to the embodiment described above with reference to fig. 2. Thus, if it is determined 201 that data corresponding to the level of sulfur poisoning is above the sulfur poisoning threshold value, the temperature Tcat of the first catalytic converter 8 is determined 231.

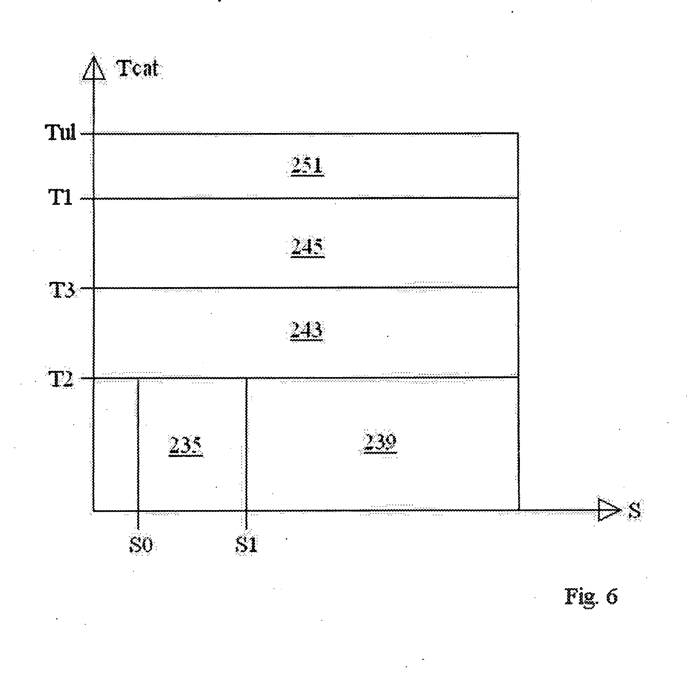

If the first catalytic converter temperature Tcat is not above a second temperature threshold value T2, 232, which is lower than the first temperature threshold value T1 mentioned above, depending on the requested torque RT, and the engine speed S, either no regeneration is initiated, or the first regeneration stage including a fuel injection regeneration measure 235 or a combustion inhibition regeneration measure 239 is initiated so as to increase the temperature of the first catalytic converter 8, similarly to what is described above with reference to fig. 2 and 3, (see also fig. 6).

Also, similarly to what is described above, during the fuel injection regeneration measure 235 or the combustion inhibition regeneration measure 239, the temperature of the first catalytic converter 8, the requested torque RT and/or the engine speed S are continuously monitored 231, 234, 236, 238, 240.

Referring to fig. 5, when the first catalytic converter temperature Tcat is determined to have reached above the second temperature threshold value T2, 242, the fuel injection regeneration measure 235 or the combustion inhibition regeneration measure 239, which ever is active, is discontinued, and a secondary air exhaust gas treatment device regeneration measure 243 is initiated. This measure, herein also referred to as a secondary air regeneration measure 243, comprises controlling of the throttle valve 10 and/or the fuel injection means 11, so that a rich mixture of air and fuel is provided in the cylinders 2, and controlling the air pump 31 so as to introduce air into the exhaust duct. Thereby, the rich exhaust gases is mixed with the air from the fuel pump 31, and the mixture is transported to the first catalytic converter 8, in which it is combusted so as to heat the first catalytic converter 8. The secondary air regeneration measure 243 will also heat the second catalytic converter 82.

During the secondary air regeneration measure 243 the temperature of the first catalytic converter 8 is continuously monitored 231, and when the first catalytic converter temperature Teat is determined to have reached above a third temperature threshold value T3, 244, which is lower than the first temperature threshold value T1, the secondary air regeneration measure 243 is discontinued, and ignition retard exhaust gas treatment device regeneration measure 245 is carried out. This measure, herein also referred to as an ignition retard regeneration measure 245, comprises controlling of the throttle valve 10 and/or the fuel injection means 11, so that a rich mixture of air and fuel is provided in the cylinders 2, and controlling the ignition means 16 so as to provide a relatively late ignition during the engine cycles. This will allow combustion to continue in the exhaust duct 6 in order to heat the first catalytic converter 8. The ignition retard regeneration measure 245 will also heat the second catalytic converter 82.

During the ignition retard regeneration measure 245 the temperature of the first catalytic converter 8 is continuously monitored 231. When the first catalytic converter temperature Tcat is determined to have reached above the first temperature threshold value T1*, 250, the first regeneration stage is discontinued, and the second regeneration stage including a lambda control regeneration measure 251 is carried out, as described above with reference to fig. 2 and 3.

It should be noted that as an alternative, in the second regeneration stage, a further regeneration measure, in addition to the lambda control regeneration measure 251, can be carried out in order to maintain the relatively high catalytic converter temperature suitable for the lambda control regeneration measure 251. For example, the combustion inhibition regeneration measure 239, the ignition retard regeneration measure 245 or the secondary air regeneration measure 243 can be carried out during at least one or more portions of the time during which the lambda control regeneration measure 251 is carried out. Advantageously, if the secondary air regeneration measure 243 is used in this manner, the air pump 31 is preferably such that the air flow from it can be controlled in a "stepless" way.

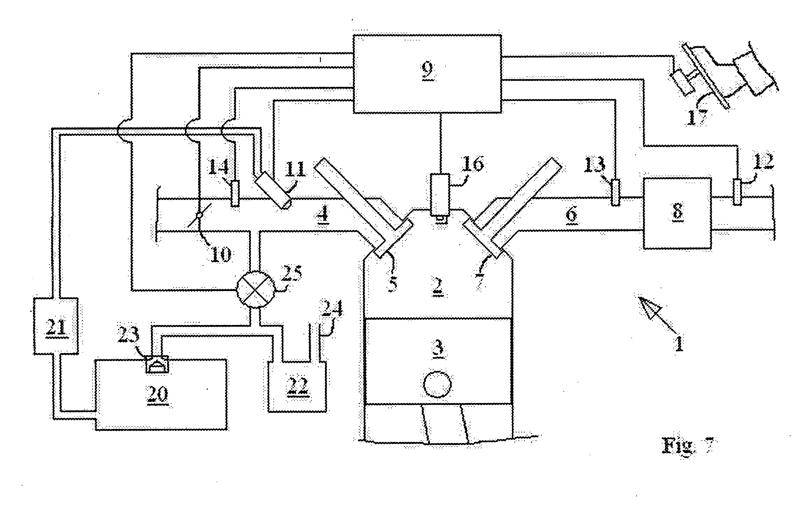

Referring to fig. 7, in a further embodiment of the invention the engine system 1, presents the same features as the engine system described above with reference to fig. 1, except for the following: The fuel injection means 11 communicate with fuel storage means in the form of a fuel tank 20, via a fuel pump 21. The engine system is also provided with a fuel vapor retainer in the form of a canister 22, (which could enclose carbon for retaining vaporized fuel as known in the art), which can communicate with the fuel tank 20 via a vapor vent valve 23. Further, the canister 22 is provided with a canister air inlet 24. The canister 22 and the fuel tank 20 can communicate with the inlet duct 4 via valve means in the form of a purge gas supply valve 25, which is controllable by the ECU 9.

A method according to the further embodiment of the invention is carried out in the same manner as described above with reference to fig. 2 and 3, except for the following: The fuel injection regeneration 235 is supplemented by a purge gas exhaust gas treatment device regeneration measure, as described below. The purge gas exhaust gas treatment device regeneration measure is described in the European patent application entitled "An engine system and a method for a purge gas regeneration of an exhaust gas treatment device in a such a system", filed by the applicant on the first filing date of the present application, and incorporated herein by reference.

In a manner corresponding to the one described, with reference to fig. 2, if the first catalytic converter temperature Tcat is not above a first temperature threshold value T1, and if the requested torque RT is not above zero, a first regeneration stage is initiated so as to increase the temperature of the first catalytic converter 8. In the first regeneration state, it is determined whether to initiate the purge gas exhaust gas treatment device regeneration measure, herein also referred to as a purge gas regeneration measure. This determination comprises determining whether the contents of fuel in the canister 22 is above a predetermined canister level threshold value. The contents of the canister can be determined as is known in the art, for example based on measured values of lambda, injected fuel and air flow. If it is determined that the contents of fuel in the canister 22 is below the threshold value, it is determined that no purge gas regeneration measure is initiated, and instead, the fuel injection regeneration measure is initiated as described above.

Alternatively, if it is determined that the canister level is low, a purge gas regeneration measure can be carried out while fuel is also allowed via the fuel injection means 11. In general, the supply of purge gas can be supplemented with injected fuel if needed to provide a suitable mixture for the regeneration.

If it is determined that the contents of fuel in the canister 22 is above the threshold value, the purge gas regeneration measure is initiated, comprising inhibiting ignition by the ignition means 16 and controlling the purge gas supply valve 25 so that fuel from the canister 22 is allowed into the inlet duct 4 so as to mix with air. The air and fuel is transported through the cylinders 2 and the exhaust duct 6. During this relatively long transportation, the air and fuel is allowed to mix well to provide a substantially homogenous mixture. The mixture reaches the catalytic converter 8 where it is combusted to increase the temperature of the converter 8 in order to eliminate sulfur deposits.

During the purge gas regeneration measure, the throttle valve 10 is controlled so as to control the combustion in the catalytic converter 8. More specifically, the ECU 9 is adapted to determine, in a similar manner to the said determination of the contents of fuel in the canister 22, the hydrocarbon content of the purge gas. Based on the hydrocarbon content of the purge gas, the throttle valve 10 is controlled so that a combustible air/fuel mixture is provided to the catalytic converter.

During the purge gas regeneration measure, the temperature of the first catalytic converter 8, the requested torque RT, and the engine speed S are monitored by the ECU 9, in a manner mentioned above concerning the fuel injection regeneration measure.

In the case the fuel injection can be controlled individually for each cylinder, alternatively, based on the determined value of the requested torque, the purge gas supply valve 25 can be kept open, and ignition allowed and fuel supplied in only one or some of the cylinders. Thereby the purge gas regeneration measure can continue while at the same time the requested torque is provided. The amount of cylinders in which ignition and fuel injection is activated can be dependent in the value of the requested torque.

It should be noted that, as an alternative to being combined with other regeneration measures, any of the regenerations measures described above, for example the fuel injection regeneration measure, the combustion inhibition regeneration measure, and the purge gas regeneration measure, may be carried out as a single measure in a regeneration of the first catalytic converter 8. The regeneration measure can be selected by the ECU 9 based on the engine system operation status, for example determined by the catalytic converter temperature, the requested torque or the engine speed, as described above. When carrying out the regeneration measure, the temperature of the first catalytic converter 8 is monitored by the ECU 9. If the first catalytic converter temperature rises above a predetermined temperature limit value, the regeneration measure is terminated. Also, when carrying out the regeneration measure, if it is determined that the level of sulfur poisoning has been reduced to the predetermined level, the regeneration measure is terminated. If the regeneration measure is terminated, for example due to the catalytic converter temperature conditions, or due to requested torque conditions, before a full regeneration of the first catalytic converter has been achieved, the level of sulfur poisoning at the interruption of the regeneration measure can be established. Thereby, the regeneration can be "continued" in a suitable manner, once circumstances, as described above, allow such a "continuation" to take place. At such a continuation, the ECU 9 once again selects a suitable regeneration measure based on the engine system operation status.

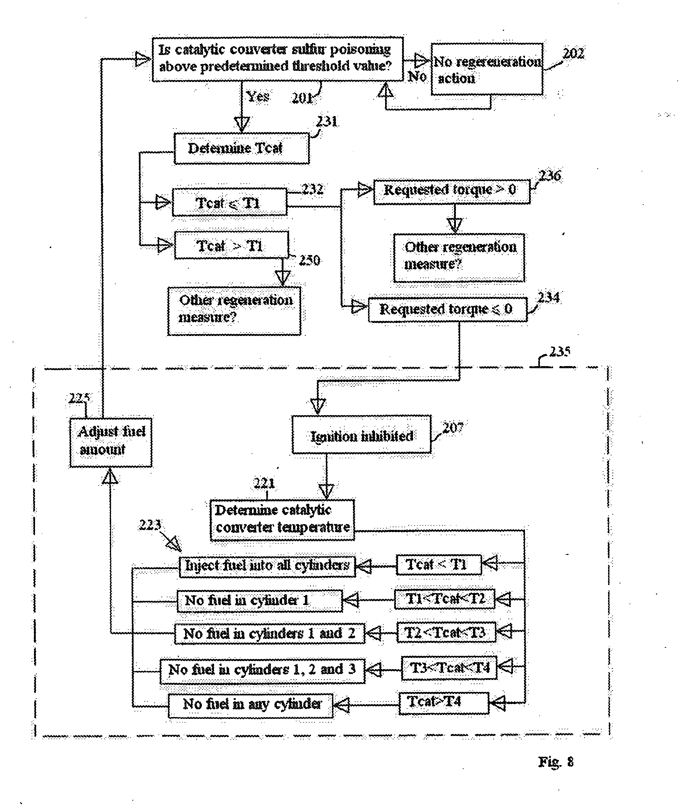

Reference is made to fig. 8, showing the fuel injection regeneration measure 235 (indicated with broken lines) according to a special embodiment of the invention. The engine in this example comprises four cylinders, no. 1- no. 4. It should be noted that this embodiment of the invention is applicable to multi-cylinder engines with any number of cylinders, i.e. two or more cylinders.

The determination 201, 231, 232, 234, based on the first catalytic converter temperature Tcat, and the requested torque RT, whether to perform the fuel injection regeneration measure 235 is similar to what has been described above with reference to fig. 2. Specifically, the fuel injection regeneration measure is initiated if the requested torque is not above zero, i.e. if the requested torque is zero or a negative. A zero or negative requested torque is usually a result of the accelerator 17 being released, i.e. un-depressed. Thus, if it is determined 234 that the requested torque is not above zero, it is determined that a fuel injection sulfur regeneration is initiated by inhibiting ignition in all cylinders 207.

The temperature Tcat of the catalytic converter 8 is determined 221, and based on the temperature, the number of cylinders in which fuel is to be injected is determined 223.

If the catalytic converter temperature Tcat is below a first temperature threshold value T1, fuel is injected into all cylinders. If the catalytic converter temperature Tcat is above the first temperature threshold value T1 and below a second temperature threshold value T2, fuel is injected in all cylinders except one of them, in this example cylinder no. 1. If the catalytic converter temperature Tcat is above the second temperature threshold value T2 and below a third temperature threshold value T3, fuel is injected in all cylinders except two of them, in this example cylinders no. 1 and 2. If the catalytic converter temperature Tcat is above the third temperature threshold value T3 and below a fourth temperature threshold value T4, fuel is injected in all cylinders except three of them, in this example cylinders no. 1, 2 and 3. If the catalytic converter temperature Tcat is above the fourth temperature threshold value T4, no fuel is injected into any of the cylinders. By controlling the number of cylinders in which fuel is injected during ignition inhibition, a coarse temperature control of the catalytic converter 8 is achieved.

Regardless of the number of cylinders in which fuel is injected during ignition inhibition, the amount of fuel injected in each cylinder with ignition inhibition is controlled 225, so that a fine temperature control of the catalytic converter 8 is achieved.

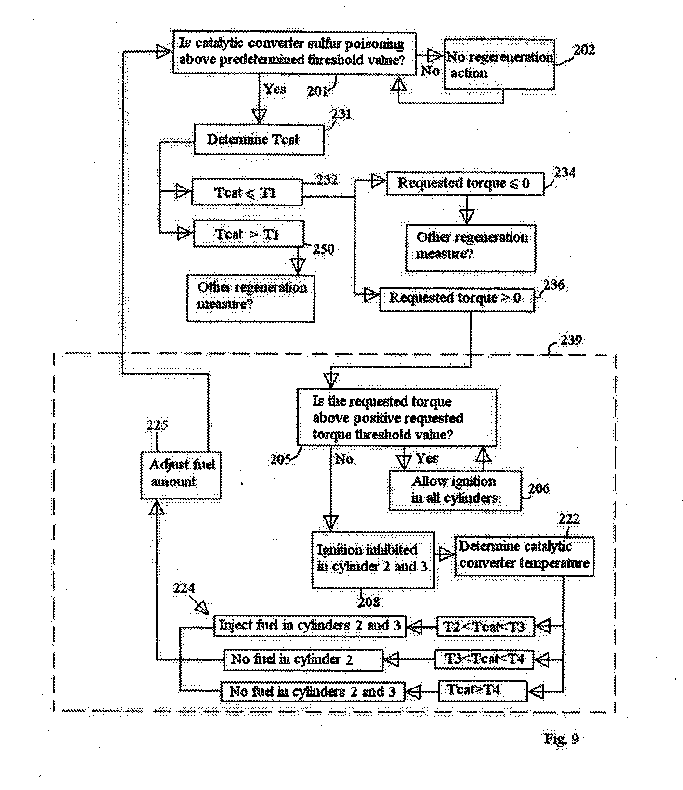

Reference is made to fig. 9, showing the combustion inhibition regeneration measure 239 (indicated with broken lines) according to a further embodiment of the invention. The engine in this example comprises four cylinders, no. 1- no. 4. Further, in this example, the four cylinders of the engine are arranged in a straight line, and, numbering the cylinders according to their spatial sequence, the normal ignition sequence of the engine is 1-3-4-2. It should be noted that this embodiment of the invention is applicable to multi-cylinder engines with any number of cylinders, i.e. two or more cylinders.

The determination 201, 231, 232, 234, based on the first catalytic converter temperature Tcat, and the requested torque RT, whether to perform the combustion inhibition regeneration measure 239 is similar to what has been described above with reference to fig. 2. Specifically, the fuel injection regeneration measure is initiated if the requested torque is above zero, i.e. if the requested torque is positive. A positive requested torque is usually a result of the accelerator 17 being depressed. (If it is determined 234 that the requested torque is not above zero, it can be determined that a fuel injection regeneration measure 235, or a purge gas regeneration measure, is initiated.)

If it is determined 236 that the requested torque is above zero, it is determined 205 whether the requested torque is above a positive requested torque threshold value. The positive requested torque threshold value is chosen so that torque values at or below it correspond to positive, moderate torque values, sufficient for low load conditions. If it is determined that the requested torque is above the positive requested torque threshold value, it is determined 206 that no combustion inhibition regeneration measure is carried out, i.e. ignition is allowed in all cylinders of the engine.

If it is determined that the requested torque is not above the positive requested torque threshold value, the temperature Tcat of the catalytic converter 8 is determined 222, and based on the temperature, the number of cylinders in which fuel is to be injected is determined 224,

If the catalytic converter temperature Tcat is below a third temperature threshold value T3, fuel is injected in all cylinders in which ignition is inhibited, i.e. cylinders no. 2 and 3. If the catalytic converter temperature Tcat is above the third temperature threshold value T3 and below a fourth temperature threshold value T4, fuel is injected in all cylinders in which ignition is inhibited, except one of them, in this example cylinder no. 2. If the catalytic converter temperature Tcat is above the fourth temperature threshold value T4, no fuel is injected into any of the cylinders in which ignition is inhibited. Thereby, as in the case of ignition inhibition in all cylinders 209, a coarse temperature control of the catalytic converter 8 is achieved.

Regardless of the number of cylinders in which fuel is injected during ignition inhibition, the amount of fuel injected in each cylinder with ignition inhibition is controlled 225, so that a fine temperature control of the catalytic converter 8 is achieved.

During the combustion inhibition regeneration measure, it is continuously determined 205 whether the requested torque, for example due to maneuvering of the accelerator pedal, is above the positive requested torque threshold value, and if it is determined that the requested torque is above the positive requested torque threshold value, it is determined 206 that the sulfur regeneration action is terminated by allowing ignition in all cylinders of the engine.

In the combustion inhibition regeneration measure embodiment described above, the combustion inhibition exhaust gas treatment device regeneration can run in any of two "modes", with combustion inhibited in all of the cylinders, or in two of the cylinders, depending on the requested torque. However, the number of such modes can be more than two. For example, in a four cylinder engine, combustion can be inhibited in one, two, three or all cylinders, where the number of cylinders in which combustion is allowed can be proportional to the requested torque. For instance, if the requested is higher that 0%, but lower than 25% of the maximum requested torque, combustion can be inhibited in three of the cylinders, if the requested is higher that 25%, but lower than 50% of the maximum requested torque, combustion can be inhibited in two of the cylinders, if the requested is higher that 50%, but lower than 75% of the maximum requested torque, combustion can be inhibited in one of the cylinders, and if the requested is higher that 75% of the maximum requested torque, combustion can allowed in all cylinders. Similar relations between the requested torque and the number of cylinders in which combustion is inhibited can be devised for engines with any number of cylinders, e.g. five, six, eight, etc.

Also, the number of cylinders in which combustion is inhibited can be dependent on the rotational speed of the engine. For example, assuming a constant requested torque, combustion can be inhibited in a relatively large number of cylinders at relatively high engine speeds, and combustion can be inhibited in a relatively small number of cylinders, or no cylinders, at relatively low engine speeds.

As an alternative to the fuel injection adjustment during the combustion inhibition regeneration measure, the number of cylinders in which fuel is injected with ignition inhibited can be kept constant. According to this alternative, if it is determined that the requested torque is not above the positive requested torque threshold value, the combustion inhibition regeneration measure is carried out by inhibiting ignition in some of the cylinders, and allowing fuel injection into these cylinders. In the remaining cylinders ignition is allowed, so that air and fuel injected can be combusted to meet output torque requirements.

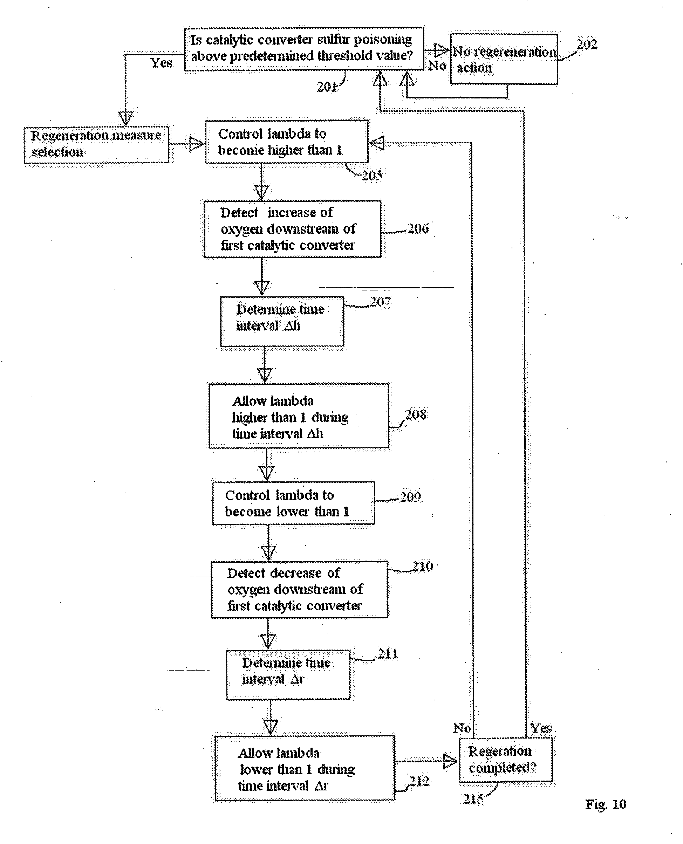

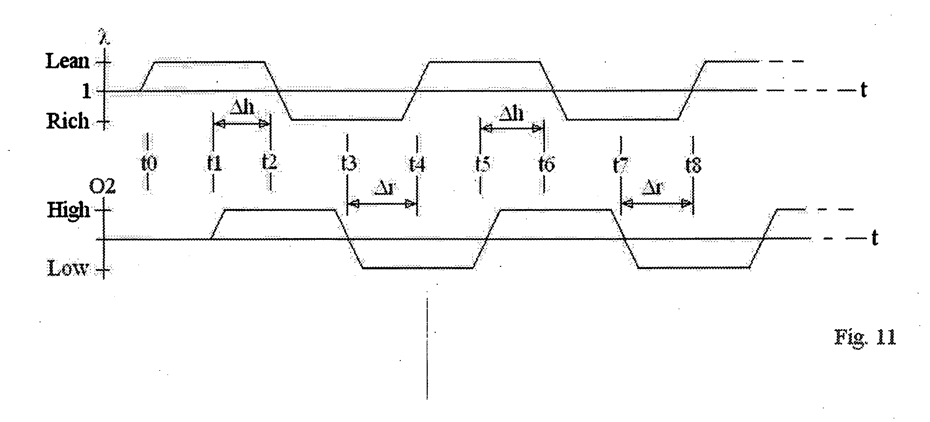

With reference to fig. 10 and 11, the lambda control regeneration measure 251 will here be described in greater detail. Similarly to what has been described above, if it is determined 201 that the data corresponding to the level of sulfur poisoning is above the sulfur poisoning threshold value, a selection of a suitable regeneration measure is carried out, for example as described above with reference to fig. 2. Whether immediately selected, or initiated after another regeneration measure, the lambda control exhaust gas treatment device regeneration is performed by repetitively performing the following regeneration steps:

At a time t0 (fig. 11), the lambda value λ is controlled so as to become higher than 1, (block 205, fig. 10). The amplitude of the lambda increase is determined by the ECU 9 as described below. It should be mentioned that, depending in the status of the first catalytic converter 8, the regeneration measure can also begin with controlling the lambda value λ so as to become lower than 1, as described below.

At a time t1, following t0, the ECU detects 206, based on signals from the downstream gas sensor 12, an increase of the oxygen content O2 downstream the first catalytic converter (8). The time delay, t0-t1, from the increase of the lambda value λ of the air/fuel mixture to the oxygen increase detection downstream of the first catalytic converter 8 is largely due to oxygen storage in the first catalytic converter 8. More specifically, a surplus of oxygen in the exhaust gases is adsorbed in the first catalytic converter 8, and when the oxygen storage has reached the maximum oxygen storage capacity of the first catalytic converter 8, oxygen is transported through the converter without being stored and as a result the downstream gas sensor 12 reacts to the increased oxygen content.

The ECU 9 is adapted to determine the ageing status of the first catalytic converter 8, based on the following principles: Based partly on time delays, such as said time delay, t0-t1, from the increase of the lambda value λ of the air/fuel mixture to the oxygen increase detection downstream of the first catalytic converter 8, the oxygen storage capacity of the first catalytic converter can be determined. Based on a stored predetermined relationship between the oxygen storage capacity and the catalytic converter ageing, the ageing status of the first catalytic converter 8 can be determined.

Before controlling the lambda so at so decrease, the ECU 9 determines 207, as described below, a time interval, t1-t2, here referred to as a high oxygen time interval Δh, and allows 208 the engine to operate on a lambda higher than 1 during the high oxygen time interval. At the end of the high oxygen time interval Δh following the detection of the increase of the oxygen content, the lambda value is controlled so as to decrease at a time t2.

The amplitude of the lambda increase and the high oxygen time interval Δh are determined based on the air flow through the inlet duct 4, in turn based on signals received from the air flow sensor 14, the level of sulfur poisoning in the first catalytic converter 8, the first catalytic converter temperature, and the first catalytic converter ageing status.

Particularly, if the air flow (or mass flow) is relatively high, the high oxygen time interval Δh is chosen to be relatively short. Contrarily, if the air flow is relatively low, the high oxygen time interval Ah is chosen to be relatively long. Also, alternatively, or in addition, if the air flow is relatively high, the amplitude of the lambda increase is chosen to be relatively small. Contrarily, if the air flow is relatively low, the amplitude of the lambda increase is chosen to be relatively large.

Further, if the catalytic converter temperature is relatively high, the high oxygen time interval Δh is chosen to be relatively long. Contrarily, if the catalytic converter temperature is relatively low, the high oxygen time interval Δh is chosen to be relatively short. Also, alternatively, or in addition, if the catalytic converter temperature is relatively high, the amplitude of the lambda increase is chosen to be relatively large. Contrarily, if the catalytic converter temperature is relatively low, the amplitude of the lambda increase is chosen to be relatively small.

In addition, if the level of sulfur poisoning in the first catalytic converter 8 is relatively high, the high oxygen time interval Ah is chosen to be relatively long. Contrarily, if the level of sulfur poisoning is relatively low, the high oxygen time interval Δh is chosen to be relatively short. Also, alternatively, or in addition, if the level of sulfur poisoning is relatively high, the amplitude of the lambda increase is chosen to be relatively large. Contrarily, if the level of sulfur poisoning is relatively low, the amplitude of the lambda increase is chosen to be relatively small.

Thus, during the repeated steps of the lambda control regeneration measure, subsequent high oxygen time intervals and/or amplitudes of subsequent lambda increases are repetitively adjusted based on the air flow, the level of sulfur poisoning in the first catalytic converter 8, and the first catalytic converter temperature.

At the time t2, the lambda value is controlled 209 so as to become lower than 1. In an alternative embodiment, the lambda value is allowed to stay approximately 1, before being changed so as to become lower than 1. The amplitude of the lambda decrease is determined by the ECU 9 as described below.

At a time t3, following t2, the ECU detects 210, based on signals from the downstream gas sensor 12, a decrease of the oxygen content 02 downstream the first catalytic converter 8. Similar to the case of lambda being above 1, the time delay, t2-t3, from the decrease of the lambda value λ of the air/fuel mixture to the oxygen decrease detection downstream of the first catalytic converter 8 is largely due to oxygen storage in the first catalytic converter 8. More specifically, oxygen stored in the first catalytic converter 8 is during the time interval t2-t3 used in oxidation processes of the converter, and when the oxygen has been reduced to a minimum level, the oxygen content downstream of the converter decreases.

Before controlling the lambda so at so increase, the ECU 9 determines 211, as described below, a time interval, t3-t4, here referred to as a low oxygen time interval Δr, and allows 212 the engine to operate on a lambda lower than 1 during the low oxygen time interval Δr.

Similar to the amplitude of the lambda increase and the high oxygen time interval Δh, the amplitude of the lambda decrease and the low oxygen time interval Δr are determined based on the air flow, the level of sulfur poisoning in the first catalytic converter 8, and the first catalytic converter temperature. Thus, during the repeated steps of the lambda control regeneration measure, subsequent low oxygen time intervals and/or amplitudes of subsequent lambda decreases are repetitively adjusted.

Also, the high and low oxygen time intervals Δh, Δr and/or the amplitudes of lambda increases and decreases can be adjusted based on the first catalytic converter ageing status. In general, with more ageing of the first catalytic converter, the high and low oxygen time intervals Δh, Δr and/or the amplitudes of lambda increases and decreases can be adjusted so as to be shorter and smaller, respectively.

As mentioned, the ECU 9 can be adapted to terminate a regeneration action when the level of sulfur poisoning has been reduced to a predetermined level. Thus, referring to fig. 10, during the lambda control regeneration measure, the level of sulfur poisoning of the first catalytic converter is determined 215. If it is determined 215 that the level of sulfur poisoning has been reduced to the predetermined level, the lambda control regeneration measure is terminated,

If it is determined 215 that the level of sulfur poisoning has not been reduced to the predetermined level, the steps above are repeated by controlling, at the end of the low oxygen time interval Δr following the detection of the decrease of the oxygen content, the lambda value is so as to increase at a time t4.

As can be seen in fig. 11, the repeated regeneration steps are carried out so that the lambda value oscillates around 1. Of course, since the time intervals of individual phases of the regeneration, such as the low oxygen time interval Δr, varies as described above, the frequency of the lambda value oscillation will vary as well.

The lambda value oscillation is also advantageous for performing the catalytic converter poisoning detection as described in said European patent application entitled "An internal combustion engine system and a method for determining a condition of an exhaust gas treatment device in a such a system", filed by the applicant on the first filing date of the present application, and incorporated herein by reference. In one embodiment, the oscillation of this detection method is continued upon catalytic converter poisoning detection so as to regenerate the catalytic converter as described above. Preferably, the amplitude and/or the high and low oxygen time intervals Δh, Δr are increased during the regeneration.

In the lambda control regeneration measure embodiment described above, high and low oxygen time intervals Δh, Δr are determined individually, but alternatively, at each repeated sequence of the steps 205-212 in the regeneration, one determination can be carried out for both of said time intervals Δh, Δr, and thereby they can be the same or weighted by suitable individual factors.

It should also be mentioned that in an alternative embodiment the lambda value can be controlled so as to be decreased or increased immediately upon a detection of an increase or a decrease, respectively, of the oxygen content downstream of or within the first exhaust gas treatment device 8. This means that high and low oxygen time intervals Δh, Δr are zero.

As mentioned, the engine system comprises a second catalytic converter 82 located downstream of the first catalytic converter 8, and downstream of the downstream gas sensor 12. The second catalytic converter 82 serves as a buffer for any emissions released from the first catalytic converter 8 during its regeneration, for example due to the extended periods of lean and rich operations, i.e. the high and low oxygen time intervals Δh, Δr of the lambda control regeneration measure.

The ECU 9 is adapted to store a model of the second catalytic converter 82, comprising modeled response algorithms for a number of input parameters. Based on this model, the ECU 9 can control the lambda value so that emission levels downstream of the second catalytic converter 82 are kept to a minimum. The model of the second catalytic converter 82 provides data on emission substances in the exhaust gases downstream of the second catalytic converter 82, at least partly by modeling the oxygen storage capacity of the second catalytic converter, more particularly based on input parameters such as the air mass flow, and the exhaust temperature obtained as described above, as well as the oxygen content downstream of the first catalytic converter 8 obtained from signals from the downstream gas sensor 12. Thereby, the lambda value can be controlled so as to adjust the high and low oxygen time intervals Δh, Δr and/or the maximum and minimum lambda values in the oscillations of the lambda control regeneration measure described above, in order to minimize emission levels downstream of the second catalytic converter 82.

Also, where the high and low oxygen time intervals Δh, Δr of the lambda control regeneration measure described above are positive, the lambda control, alternating between rich and lean conditions, will provide regeneration also of the second catalytic converter 82.

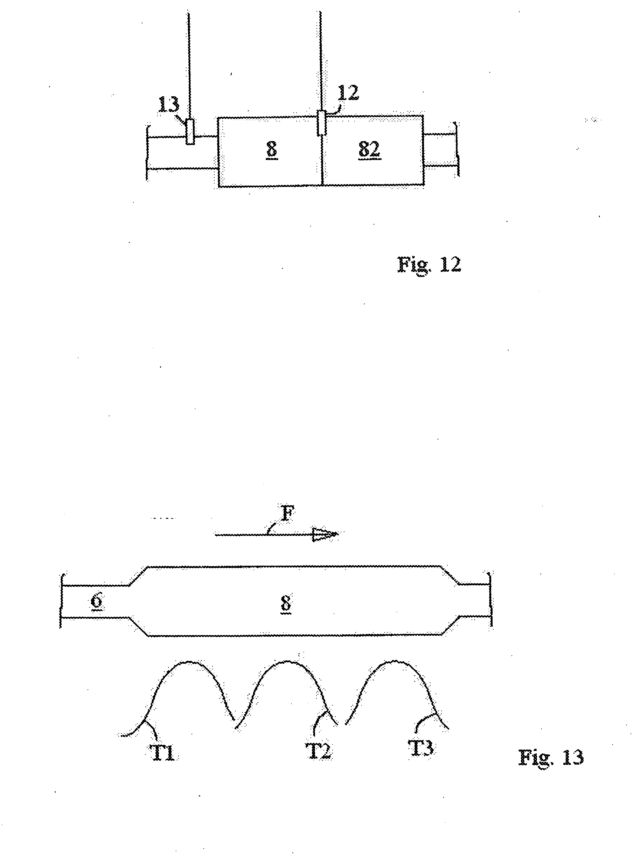

Above, the first and second catalytic converters 8, 82 are separate units in the exhaust gas system. Alternatively, as depicted in fig. 12, the first and second catalytic converters 8, 82 can be provided as integrated units, the first catalytic converter 8 being provided, as in the embodiment described above, upstream of the second catalytic converter 82. Thereby, the downstream gas sensor 12 can be located at an interface between the first and second catalytic converters 8, 82. It also should be mentioned that the engine system can comprise at least one further catalytic converter downstream of the second catalytic converter, or alternatively present no catalytic converter downstream of the first catalytic converter.

The ECU 9 is adapted to determine the temperature of the second catalytic converter 82 based at least partly on the first catalytic converter temperature, the air flow, the lambda value, the ambient temperature, engine load, and engine rotational speed. As an alternative, the ECU 9 can be adapted to receive signals from a temperature sensor located between the first and second catalytic converters 8, 82, based on which signals, the second catalytic converter temperature can be determined. Thus, the ECU 9 is adapted to determine the temperature of the entire catalytic converter assembly comprising the first and second catalytic converters 8, 82.

Referring to fig. 13, in which a gas flow direction is indicated with an arrow F, the throttle valve 10 is also used, specially during fuel injection regeneration measures and during purge gas regeneration measures, to control the location of a maximum temperature in the first catalytic converter. By controlling the throttle valve 10 so that a relatively small air flow is provided, the air/fuel mixture will be combusted relatively far upstream in the first catalytic converter 8. As a result, the temperature distribution in the first catalytic converter, indicated in fig. 13 with the curve T1, will present a maximum relatively far upstream. By controlling the throttle valve 10 so that larger air flows are provided, the air/fuel mixture will be combusted further downstream in the first catalytic converter 8. As a result, the temperature distribution in the first catalytic converter, T2, T3, will present maximums further downstream, depending on the air flow. In other words, increasing the air flow will move the maximum temperature downstream.

Thus, the location of the maximum temperature can be changed, during the sulfur regeneration, which in turn makes it possible to obtain a particularly thorough regeneration, since it can be secured that the temperature is increased sufficiently for sulfur deposit removal throughout the entire catalytic converter.

Still referring to fig. 13, as mentioned the ECU 9 is adapted to determine the temperature of the entire catalytic converter assembly comprising the first and second catalytic converters 8, 82. In addition, the throttle valve 10 can be used, specially during fuel injection regeneration measures and during purge gas regeneration measures, to control the location of a maximum temperature also in the second catalytic converter 82. By controlling the throttle valve 10 so that a large air flow is provided, the air/fuel mixture will be combusted downstream of the first catalytic converter 8, in the second catalytic converter 82. Thus, it can be secured that the temperature is increased sufficiently for sulfur deposit removal throughout the entire catalytic converter assembly. Of course, this temperature control can also be used to increase the temperature for sulfur deposit removal throughout a catalytic converter assembly comprising more than two catalytic converters.

As an alternative to, or in addition to a throttle valve 10, the air flow control means can comprise control means (not shown) for the inlet valve(s) 5 and/or the exhaust valve(s) 7, for example in the form of a variable valve timing (VVT) system and/or a cam profile shifting (CPS) system. Such inlet and/or exhaust valve control means can be used as an alternative or in addition to the throttle valve 10 for controlling the combustion in the first and the second catalytic converters 8, 82, specially during the fuel injection regeneration measure and during the purge gas regeneration measure. As a further alternative to, or in addition to a throttle valve 10, where the engine system comprises an air pump 31 as shown in fig. 4, secondary air can be used to control the combustion in the first and the second catalytic converters 8, 82

Besides exhaust gas treatment device poisoning caused by sulfur, the invention is equally applicable to poisoning caused by other substances, such as phosphorus. In particular, the invention results in the catalyst average temperature being kept higher, and as a result, long term phosphorus poisoning can be reduced.

## Claims

1. A method for an exhaust gas treatment device (8) in an engine system comprising an internal combustion engine comprising at least one cylinder (2), a lambda value of a mixture of air and fuel provided in at least one of the cylinders being controllable by control of air flow control means (10) and/or fuel injection means (11) of the engine, **characterized in that** the method comprises performing an exhaust gas treatment device regeneration, comprising a first regeneration stage comprising controlling the engine system (235, 239) so as to increase the temperature of the exhaust gas treatment device (8), and a second regeneration stage, following the first regeneration stage, the first regeneration stage providing a preparation for the second regeneration stage in the form of increasing the temperature of the exhaust gas treatment device, the second regeneration stage comprising repetitively performing regeneration steps (251) comprising controlling the lambda value so as to become lower than 1 and controlling the lambda value so as to become higher than 1.

2. A method according to claim 1, comprising determining (231) a temperature (Tcat) of the exhaust gas treatment device (8), and performing the second regeneration stage if the exhaust gas treatment device temperature (Tcat) is above a first temperature threshold value (T1).

3. A method according to any of the preceding claims, comprising determining a value of at least one condition parameter (RT, S) related to the operational condition of the engine system, and selecting, at least partly based on the value of the at least one condition parameter (RT, S), for the first regeneration stage an exhaust gas treatment device regeneration measure out of at least two exhaust gas treatment device regeneration measures (235, 239).

4. A method according to claim 3, wherein the engine comprises at least two cylinders (2), and one of the condition parameters is a control parameter corresponding to, or being related to a requested torque (RT) of the engine.

5. A method according to claim 4, wherein one of the exhaust gas treatment device regeneration measures (235) comprises inhibiting combustion in all cylinders (2), and controlling the fuel injection means (11) so that fuel is allowed into at least one of the cylinders (2), and another of the exhaust gas treatment device regeneration measures (239) comprises inhibiting combustion in at least one but fewer than all of the cylinders (2), and controlling the fuel injection means (11) so that fuel is allowed into at least one of the cylinders (2) in which combustion is inhibited.

6. A method according to any of the claims 3-5, wherein the engine comprises at least two cylinders (2), wherein one of the condition parameters is the engine rotational speed (S), and wherein one of the exhaust gas treatment device regeneration measures (239) comprises inhibiting combustion in at least one but fewer than all of the cylinders (2), and controlling the fuel injection means (11) so that fuel is allowed into at least one of the cylinders (2) in which combustion is inhibited.

7. A method according to any of the preceding claims, wherein the engine system further comprises a downstream gas sensor (12), located downstream of, or at least partly within, the exhaust gas treatment device (8), and wherein the repeated regeneration steps of the second regeneration stage comprises
- detecting, based on signals from the downstream gas sensor (12), a decrease of the oxygen content downstream of or within the exhaust gas treatment device (8), and
- controlling, in dependence of the detection of the decrease of the oxygen content, the lambda value so as to increase.

8. A method according to claim 7, wherein the step of controlling the lambda value so as to increase is performed at the end of a low oxygen time interval (Δr) following the detection of the decrease of the oxygen content.

9. A method according to claim 8, comprising determining an air flow to the at least one cylinder, the low oxygen time interval (Δr) being at least partly dependent upon the air flow.

10. A method according to claim 9, comprising adjusting, based at least partly on the air flow, the low oxygen time interval (Δr).

11. A method according to any of the claims 7-10, wherein the repeated regeneration steps of the second regeneration stage comprises
- detecting, based on signals from the downstream gas sensor (12), an increase of the oxygen content downstream of or within the exhaust gas treatment device (8), and
- controlling, in dependence of the detection of the increase of the oxygen content, the lambda value so as to decrease.

12. A method according to claim 11, wherein the step of controlling the lambda value so as to decrease is performed at the end of a high oxygen time interval (Δh) following the detection of the increase of the oxygen content.

13. A method according to claim 12, comprising determining an air flow to the at least one cylinder, the high oxygen time interval (Δh) being at least partly dependent upon the air flow.

14. A method according to claim 13, comprising adjusting, based at least partly on the air flow, the high oxygen time interval (Δh).

15. A method according to any of the claims 11-14, wherein the repeated regeneration steps are carried out so that the lambda value oscillates around 1.

16. A method according to any of the preceding claims, wherein the exhaust gas treatment device (8) is a first exhaust gas treatment device (8), and the engine system comprises a second exhaust gas treatment device (82) located downstream of the first exhaust gas treatment device (8).

17. A method according to claim 16, wherein the second exhaust gas treatment device (82) is located downstream of the downstream gas sensor (12).

18. A method according to any of the preceding claims, wherein the first regeneration stage comprises a fuel injection exhaust gas treatment device regeneration measure comprising inhibiting combustion in the at least one cylinder (2), and controlling the fuel injection means (11) so that fuel is allowed into at least one of the cylinders (2).

19. A method according to claim 18, wherein the step of inhibiting combustion comprises controlling ignition means (16) at the cylinder (2) so that combustion is inhibited.

20. A method according to any of the claims 18-19, wherein the fuel injection exhaust gas treatment device regeneration measure is performed if the existence of at least one condition indicative of a fuel injection inhibition is determined.

21. A method according to claim 20, wherein the step of determining the existence of a condition, indicative of a fuel injection inhibition, comprises determining a value of a control parameter corresponding to, or being related to a requested torque of the engine, and comparing the determined control parameter value with a control parameter threshold value, the determination of the existence of a condition indicative of a fuel injection inhibition, being dependent on the comparison between the determined control parameter value and the control parameter threshold value.

22. A method according to any of the claims 18-21, comprising controlling the air flow control means (10) so as to control the combustion in the exhaust gas treatment device (8) during the fuel injection exhaust gas treatment device regeneration measure.

23. A method according to claim 22, wherein controlling the combustion in the exhaust gas treatment device (8) comprises controlling a location or a region of a maximum temperature in the exhaust gas treatment device (8).

24. A method according to any of the preceding claims, wherein the first regeneration stage comprises a combustion inhibition exhaust gas treatment device regeneration measure, comprising inhibiting combustion in at least one of the cylinders (2), and controlling the fuel injection means (11) so that fuel is allowed into at least one of the cylinders (2) in which combustion is inhibited.

25. A method according to claim 24, comprising determining during the combustion inhibition exhaust gas treatment device regeneration measure a value of a control parameter corresponding to, or being related to a requested torque of the engine, the combustion inhibition exhaust gas treatment device regeneration measure being dependent on the control parameter value determination.

26. A method according to claim 25, wherein the internal combustion engine comprises at least two cylinders (2), and the number of cylinders in which combustion is inhibited is dependent on the control parameter value determination.

27. A method according to any of the preceding claims, wherein the engine system further comprises fuel storage means (20), and a fuel vapor retainer (22), the first regeneration stage comprising a purge gas exhaust gas treatment device regeneration measure, comprising allowing purge gas from the fuel vapor retainer (22) into at least one of the cylinders (2), and inhibiting combustion in at least one of the cylinders (2) into which purge gas is allowed.

28. An engine system comprising an internal combustion engine comprising at least one cylinder (2), a first exhaust gas treatment device (8), and an engine control unit (9) adapted to control, by control of air flow control means (10) and/or fuel injection means (11) of the engine, a lambda value of a mixture of air and fuel provided in at least one of the cylinders, **characterized in that** the engine control unit (9) is adapted to control an exhaust gas treatment device regeneration, comprising a first regeneration stage, and a second regeneration stage following the first regeneration stage, the engine control unit (9) being adapted to control, in the first regeneration stage, the engine system so as to provide a preparation for the second regeneration stage in the form of increasing the temperature of the exhaust gas treatment device (8) and to repetitively control, in the second regeneration stage, the lambda value so as to become lower than 1 and so as to become higher than 1.

29. An engine system according to claim 28, wherein the engine control unit (9) is adapted to determine a temperature (Tcat) of the exhaust gas treatment device (8), and to allow the second regeneration stage if the exhaust gas treatment device temperature (Tcat) is above a first temperature threshold value (T1).

30. An engine system according to any of the claims 28-29, wherein the engine control unit (9) is adapted to determine a value of at least one condition parameter (RT, S) related to the operational condition of the engine system, and to select, at least partly based on the value of the at least one condition parameter (RT, S), for the first regeneration stage an exhaust gas treatment device regeneration measure out of at least two exhaust gas treatment device regeneration measures (235,239).

31. An engine system according to claim 30, wherein the engine comprises at least two cylinders (2), and one of the condition parameters is a control parameter corresponding to, or being related to a requested torque (RT) of the engine.

32. An engine system according to claim 31, wherein one of the exhaust gas treatment device regeneration measures (235) comprises inhibiting combustion in all cylinders (2), and controlling the fuel injection means (11) so that fuel is allowed into at least one of the cylinders (2), and another of the exhaust gas treatment device regeneration measures (239) comprises inhibiting combustion in at least one but fewer than all of the cylinders (2), and controlling the fuel injection means (11) so that fuel is allowed into at least one of the cylinders (2) in which combustion is inhibited.

33. An engine system according to any of the claims 30-32, wherein the engine comprises at least two cylinders (2), wherein one of the condition parameters is the engine rotational speed (S), and wherein one of the exhaust gas treatment device regeneration measures (239) comprises inhibiting combustion in at least one but fewer than all of the cylinders (2), and controlling the fuel injection means (11) so that fuel is allowed into at least one of the cylinders (2) in which combustion is inhibited.

34. An engine system according to any of the claims 28-33, wherein the engine system further comprises a downstream gas sensor (12), located downstream of, or at least partly within, the exhaust gas treatment device (8), the engine control unit (9) being adapted to repetitively, in the second regeneration stage,
- detect, based on signals from the downstream gas sensor (12), a decrease of the oxygen content downstream of or within the exhaust gas treatment device (8), and
- control, in dependence of the detection of the decrease of the oxygen content, the lambda value so as to increase.

35. An engine system according to claim 34, wherein the engine control unit (9) is adapted to perform the control of the lambda value so as to increase, at the end of a low oxygen time interval (Δr) following the detection of the decrease of the oxygen content.

36. An engine system according to claim 35, wherein the engine control unit (9) is adapted to determine an air flow to the at least one cylinder, and to determine the low oxygen time interval (Δr) at least partly dependent upon the air flow.

37. An engine system according to claim 36, wherein the engine control unit (9) is adapted to adjust, based at least partly on the air flow, the low oxygen time interval (Δr).

38. An engine system according to any of the claims 34-37, wherein the engine control unit (9) is adapted to repetitively, in the second regeneration stage,
- detect, based on signals from the downstream gas sensor (12), an increase of the oxygen content downstream of or within the first exhaust gas treatment device (8), and
- control, in dependence of the detection of the increase of the oxygen content, the lambda value so as to decrease.

39. An engine system according to claim 38, wherein the engine control unit (9) is adapted to perform the control of the lambda value so as to decrease, at the end of a high oxygen time interval (Δh) following the detection of the increase of the oxygen content.

40. An engine system according to claim 39, wherein the engine control unit (9) is adapted to determine an air flow to the at least one cylinder, the high oxygen time interval (Δh) being at least partly dependent upon the air flow.

41. An engine system according to claim 40, wherein the engine control unit (9) is adapted to adjust, based at least partly on the air flow, the high oxygen time interval (Δh).

42. An engine system according to any of the claims 38-41, wherein the engine control unit (9) is adapted to control the lambda value so as to oscillate around 1.

43. An engine system according to any of the claims 28-42, wherein the exhaust gas treatment device (8) is a first exhaust gas treatment device (8), and the engine system further comprises a second exhaust gas treatment device (82) located downstream of the first exhaust gas treatment device (8).

44. An engine system according to claim 43, wherein the second exhaust gas treatment device (82) is located downstream of the downstream gas sensor (12).

45. An engine system according to any of the claims 28-44, wherein the engine control unit (9) is adapted to control, in the first regeneration stage, a fuel injection exhaust gas treatment device regeneration measure, the engine control unit (9) being adapted to inhibit, during the fuel injection exhaust treatment device regeneration measure, combustion in the at least one cylinder (2), and to control, during the fuel injection exhaust gas treatment device regeneration measure, the fuel injection means (11) so that fuel is allowed into at least one of the cylinders (2).

46. An engine system according to claim 45, wherein the engine comprises ignition means (16) at each cylinder (2), the engine control unit (9) being adapted to control the ignition means (16), during the fuel injection exhaust treatment device regeneration measure, so that ignition is inhibited such that combustion is inhibited in the cylinder (2) into which fuel is allowed.

47. An engine system according to any of the claims 45-46, wherein the engine control unit (9) is adapted to allow the fuel injection exhaust gas treatment device regeneration measure if the existence of at least one condition indicative of a fuel injection inhibition is determined.

48. An engine system according to claim 47, wherein the engine control unit (9) is adapted to determine, for the determination of the existence of the condition indicative of a fuel injection inhibition, a value of a control parameter corresponding to, or being related to a requested torque of the engine, and to compare the determined control parameter value with a control parameter threshold value, the determination of the existence of a condition indicative of a fuel injection inhibition, being dependent on the comparison between the determined control parameter value and the control parameter threshold value.

49. An engine system according to any of the claims 45-48, wherein the engine control unit (9) is adapted to control the air flow control means (10) so as to control the combustion in the exhaust gas treatment device (8) during the fuel injection exhaust gas treatment device regeneration measure.

50. An engine system according to claim 49, wherein the engine control unit (9) is adapted to control the air flow control means (10) so as to control a location or a region of a maximum temperature in the exhaust gas treatment device (8).

51. An engine system according to any of the claims 28-50, wherein the engine control unit (9) is adapted to control, in the first regeneration stage, a combustion inhibition exhaust gas treatment device regeneration measure, the engine control unit (9) being adapted to inhibit, during the combustion inhibition exhaust gas treatment device regeneration measure, combustion in at least one of the cylinders (2), and control, during the combustion inhibition exhaust gas treatment device regeneration measure, the fuel injection means (11) so that fuel is allowed into at least one of the cylinders (2) in which combustion is inhibited.

52. An engine system according to claim 51, wherein the engine control unit (9) is adapted to determine, during the combustion inhibition exhaust gas treatment device regeneration measure, a value of a control parameter corresponding to, or being related to a requested torque of the engine, and to control the combustion inhibition exhaust gas treatment device regeneration measure in dependence on the control parameter value.

53. An engine system according to claim 52, wherein the internal combustion engine comprises at least two cylinders (2), and the engine control unit (9) is adapted to determine, during the combustion inhibition exhaust gas treatment device regeneration measure and based on the control parameter value determination, the number of cylinders in which combustion is inhibited.

54. An engine system according to any of the claims 28-53, wherein the engine system further comprises fuel storage means (20), and a fuel vapor retainer (22), the engine control unit (9) further being adapted to control, in the first regeneration stage, a purge gas exhaust treatment device regeneration measure, the engine control unit (9) being adapted to control, during the purge gas exhaust treatment device regeneration measure, valve means (25) so as to allow purge gas from the fuel vapor retainer (22) into at least one of the cylinders (2), and to inhibit, during the purge gas exhaust treatment device regeneration measure, combustion in at least one of the cylinders (2) into which purge gas is allowed.

## Patentansprüche

1. Verfahren für eine Abgasbehandlungsvorrichtung (8) in einem Motorsystem, das einen Verbrennungsmotor mit wenigstens einem Zylinder (2) umfasst, wobei ein Lamdawert eines Luft-/Kraftstoff-Gemisches, das in wenigstens einem der Zylinder bereitgestellt wird, durch die Steuerung von Luftdurchfluss-Steuermitteln (10) und/oder von Kraftstoffeinspritzmitteln (11) des Motors gesteuert werden kann, **dadurch gekennzeichnet, dass** das Verfahren das Ausführen einer Abgasbehandlungsvorrichtungs-Regeneration umfasst, die eine erste Regenerationsstufe, die das Steuern des Motorsystems (235, 239) in der Weise, dass die Temperatur der Abgasbehandlungsvorrichtung (8) erhöht wird, und eine zweite Regenerationsstufe, die der ersten Regenerationsstufe folgt, umfasst, wobei die erste Regenerationsstufe eine Vorbereitung für die zweite Regenerationsstufe in Form der Erhöhung der Temperatur der Abgasbehandlungsvorrichtung schafft, wobei die zweite Regenerationsstufe das wiederholte Ausführen von Regenerationsschritten (251) umfasst, die das Steuern des Lamdawertes in der Weise, dass er niedriger als 1 wird, und das Steuern des Lamdawertes in der Weise, dass er höher als 1 wird, umfassen.

2. Verfahren nach Anspruch 1, das das Bestimmen (231) einer Temperatur (Tcat) der Abgasbehandlungsvorrichtung (8) und das Ausführen der zweiten Regenerationsstufe, falls die Temperatur (Tcat) der Abgasbehandlungsvorrichtung über einem ersten Temperaturschwellenwert (T1) liegt, umfasst.

3. Verfahren nach einem der vorhergehenden Ansprüche, das das Bestimmen eines Wertes wenigstens eines Zustandsparameters (RT, S), der mit dem Betriebszustand des Motorsystems in Beziehung steht, und das Auswählen einer Abgasbehandlungsvorrichtungs-Regenerationsmaßnahme wenigstens teilweise anhand des Wertes des wenigstens einen Zustandsparameters (RT, S) für die erste Regenerationsstufe aus wenigstens zwei Abgasbehandlungsvorrichtungs-Regenerationsmaßnahmen (235, 239) umfasst.

4. Verfahren nach Anspruch 3, wobei der Motor wenigstens zwei Zylinder (2) aufweist und einer der Zustandsparameter ein Steuerparameter ist, der einem angeforderten Drehmoment (RT) des Motors entspricht oder mit ihm in Beziehung steht.

5. Verfahren nach Anspruch 4, wobei eine der Abgasbehandlungsvorrichtungs-Regenerationsmaßnahmen (235) das Verhindern einer Verbrennung in allen Zylindern (2) und das Steuern der Kraftstoffeinspritzmittel (11) in der Weise, dass Kraftstoff in wenigstens einen der Zylinder (2) eingelassen wird, umfasst und eine weitere der Abgasbehandlungsvorrichtungs-Regenerationsmaßnahmen (239) das Verhindern der Verbrennung in wenigstens einem, jedoch in weniger als allen Zylindern (2) und das Steuern der Kraftstoffeinspritzmittel (11) in der Weise, dass Kraftstoff in wenigstens einen der Zylinder (2), in dem die Verbrennung verhindert wird, eingelassen wird, umfasst.

6. Verfahren nach einem der Ansprüche 3-5, wobei der Motor wenigstens zwei Zylinder (2) umfasst, wobei einer der Zustandsparameter die Motordrehzahl (S) ist und wobei eine der Abgasbehandlungsvorrichtungs-Regenerationsmaßnahmen (239) das Verhindern einer Verbrennung in wenigstens einem, jedoch in weniger als allen Zylindern (2) und das Steuern der Kraftstoffeinspritzmittel (11) in der Weise, dass Kraftstoff in wenigstens einen der Zylinder (2), in dem eine Verbrennung verhindert wird, eingelassen wird, umfasst.

7. Verfahren nach einem der vorhergehenden Ansprüche, wobei das Motorsystem ferner einen stromabseitigen Gassensor (12) aufweist, der sich stromabseitig von oder wenigstens teilweise innerhalb der Abgasbehandlungsvorrichtung (8) befindet, und wobei die wiederholten Regenerationsschritte der zweiten Regenerationsstufe umfassen:
- Detektieren anhand von Signalen von dem stromabseitigen Gassensor (12) einer Abnahme des Sauerstoffgehalts stromabseitig von oder innerhalb der Abgasbehandlungsvorrichtung (8), und
- Steuern des Lamdawertes in Abhängigkeit von der Detektion der Abnahme des Sauerstoffgehalts, so dass er ansteigt.

8. Verfahren nach Anspruch 7, wobei der Schritt des Steuerns des Lamdawertes, um ihn zu erhöhen, am Ende eines Zeitintervalls (Δr) mit niedrigem Sauerstoffgehalt, das der Detektion der Abnahme des Sauerstoffgehalts folgt, ausgeführt wird.

9. Verfahren nach Anspruch 8, das das Bestimmen eines Luftdurchflusses zu dem wenigstens einen Zylinder umfasst, wobei das Zeitintervall (Δr) mit niedrigem Sauerstoffgehalt wenigstens teilweise von dem Luftdurchfluss abhängt.

10. Verfahren nach Anspruch 9, das das Einstellen des Zeitintervalls (Δr) mit niedrigem Sauerstoffgehalt wenigstens teilweise anhand des Luftdurchflusses umfasst.

11. Verfahren nach einem der Ansprüche 7-10, wobei die wiederholten Regenerationsschritte der zweiten Regenerationsstufe umfassen:
- Detektieren anhand von Signalen von dem stromabseitigen Gassensor (12) einer Zunahme des Sauerstoffgehalts stromabseitig von oder in der Abgasbehandlungsvorrichtung (8) und
- Steuern des Lamdawertes in Abhängigkeit von der Detektion der Zunahme des Sauerstoffgehalts, damit er abnimmt.

12. Verfahren nach Anspruch 11, wobei der Schritt des Steuerns des Lamdawertes, damit er abnimmt, am Ende eines Zeitintervalls (Δh) mit hohem Sauerstoffgehalt, das der Detektion der Zunahme des Sauerstoffgehalts folgt, ausgeführt wird.

13. Verfahren nach Anspruch 12, das das Bestimmen eines Luftdurchflusses zu dem wenigstens eine Zylinder umfasst, wobei das Zeitintervall (Δh) mit hohem Sauerstoffgehalt wenigstens teilweise von dem Luftdurchfluss abhängt.

14. Verfahren nach Anspruch 13, das das Einstellen des Zeitintervalls (Δh) mit hohem Sauerstoffgehalt wenigstens teilweise anhand des Luftdurchflusses umfasst.

15. Verfahren nach einem der Ansprüche 11-14, wobei die wiederholten Regenerationsschritte in der Weise ausgeführt werden, dass der Lamdawert um 1 oszilliert.

16. Verfahren nach einem der vorhergehenden Ansprüche, wobei die Abgasbehandlungsvorrichtung (8) eine erste Abgasbehandlungsvorrichtung (8) ist und das Motorsystem eine zweite Abgasbehandlungsvorrichtung (82) umfasst, die sich stromabseitig der ersten Abgasbehandlungsvorrichtung (8) befindet.

17. Verfahren nach Anspruch 16, wobei sich die zweite Abgasbehandlungsvorrichtung (82) stromabseitig des stromabseitigen Gassensors (12) befindet.

18. Verfahren nach einem der vorhergehenden Ansprüche, wobei die erste Regenerationsstufe eine Kraftstoffeinspritz-Abgasbehandlungsvorrichtungs-Regenerationsmaßnahme umfasst, die das Verhindern einer Verbrennung in dem wenigstens einen Zylinder (2) und das Steuern der Kraftstoffeinspritzmittel (11), so dass Kraftstoff in wenigstens einen der Zylinder (2) eingelassen wird, umfasst.

19. Verfahren nach Anspruch 18, wobei der Schritt des Verhinderns einer Verbrennung das Steuern von Zündungsmitteln (16) bei dem Zylinder (2), so dass eine Verbrennung verhindert wird, umfasst.

20. Verfahren nach einem der Ansprüche 18-19, wobei die Kraftstoffeinspritz-Abgasbehandlungsvorrichtungs-Regenerationsmaßnahme ausgeführt wird, falls das Vorhandensein wenigstens eines Zustands, der eine Kraftstoffeinspritzverhinderung angibt, bestimmt wird.

21. Verfahren nach Anspruch 20, wobei der Schritt des Bestimmens des Vorhandenseins eines Zustands, der eine Kraftstoffeinspritzverhinderung angibt, das Bestimmen eines Wertes eines Steuerparameters, der einem angeforderten Drehmoment des Motors entspricht oder damit in Beziehung steht, und das Vergleichen des bestimmten Steuerparameterwertes mit einem Steuerparameterschwellenwert umfasst, wobei das Bestimmen des Vorhandenseins eines Zustands, der eine Kraftstoffeinspritzverhinderung angibt, von dem Vergleich zwischen dem bestimmten Steuerparameterwert und dem Steuerparameterschwellenwert abhängt.

22. Verfahren nach einem der Ansprüche 18 -21, das das Steuern der Luftdurchfluss-Steuermittel (10) umfasst, um die Verbrennung in der Abgasbehandlungsvorrichtung (8) während der Kraftstoffeinspritz-Abgasbehandlungsvorrichtungs-Regenerationsmaßnahme zu steuern.

23. Verfahren nach Anspruch 22, wobei das Steuern der Verbrennung in der Abgasbehandlungsvorrichtung (8) das Steuern eines Ortes oder eines Bereichs einer maximalen Temperatur in der Abgasbehandlungsvorrichtung (8) umfasst.

24. Verfahren nach einem der vorhergehenden Ansprüche, wobei die erste Regenerationsstufe eine Verbrennungsverhinderungs-Abgasbehandlungsvorrichtungs-Regenerationsmaßnahme umfasst, die das Verhindern einer Verbrennung in wenigstens einem der Zylinder (2) und das Steuern der Kraftstoffeinspritzmittel (11), so dass Kraftstoff in wenigstens einen der Zylinder (2), in dem die Verbrennung verhindert wird, eingelassen wird, umfasst.

25. Verfahren nach Anspruch 24, das das Bestimmen während der Verbrennungsverhinderungs-Abgasbehandlungsvorrichtungs-Regenerationsmaßnahme eines Wertes eines Steuerparameters, der einem angeforderten Drehmoment des Motors entspricht oder damit in Beziehung steht, umfasst, wobei die Verbrennungsverhinderungs-Abgasbehandlungsvorrichtungs-Regenerationsmaßnahme von der Steuerparameterwert-Bestimmung abhängt.

26. Verfahren nach Anspruch 25, wobei der Verbrennungsmotor wenigstens zwei Zylinder (2) umfasst und die Anzahl der Zylinder, in denen eine Verbrennung verhindert wird, von der Bestimmung des Steuerparameterwertes abhängt.

27. Verfahren nach einem der vorhergehenden Ansprüche, wobei das Motorsystem ferner Kraftstoffspeichermittel (20) und eine Kraftstoffdampf-Rückhalteeinrichtung (22) umfasst, wobei die erste Regenerationsstufe eine Spülgas-Abgasbehandlungsvorrichtungs-Regenerationsmaßnahme umfasst, die das Einlassen von Spülgas von der Kraftstoffdampf-Rückhalteeinrichtung (2) in wenigstens einen der Zylinder (2) und das Verhindern einer Verbrennung in wenigstens einem der Zylinder (2), in den Spülgas eingelassen wird, umfasst.

28. Motorsystem, das einen Verbrennungsmotor mit wenigstens einem Zylinder (2), einer ersten Abgasbehandlungsvorrichtung (8) und einer Motorsteuereinheit (9), die dazu ausgelegt ist, durch Steuern von Luftdurchfluss-Steuermitteln (10) und/oder von Kraftstoffeinspritzmitteln (11) des Motors einen Lamdawert eines Luft-/Kraftstoff-Gemisches, das für wenigstens einen der Zylinder bereitgestellt wird, zu steuern, **dadurch gekennzeichnet, dass** die Motorsteuereinheit (9) dazu ausgelegt ist, eine Abgasbehandlungsvorrichtungs-Regeneration zu steuern, die eine erste Regenerationsstufe und eine auf die erste Regenerationsstufe folgende zweite Regenerationsstufe umfasst, wobei die Motorsteuereinheit (9) dazu ausgelegt ist, in der ersten Regenerationsstufe das Motorsystem so zu steuern, dass eine Vorbereitung für die zweite Regenerationsstufe in Form einer Erhöhung der Temperatur der Abgasbehandlungsvorrichtung (8) geschaffen wird, und in der zweiten Regenerationsstufe den Lamdawert wiederholt zu steuern, derart, dass er niedriger als 1 wird und höher als 1 wird.

29. Motorsystem nach Anspruch 28, wobei die Motorsteuereinheit (9) dazu ausgelegt ist, eine Temperatur (Tcat) der Abgasbehandlungsvorrichtung (8) zu bestimmen und die zweite Regenerationsstufe zuzulassen, falls die Abgasbehandlungsvorrichtungs-Temperatur (Tcat) über einem ersten Temperaturschwellenwert (T1) liegt.

30. Motorsystem nach einem der Ansprüche 28-29, wobei die Motorsteuereinheit (9) dazu ausgelegt ist, einen Wert wenigstens eines Zustandsparameters (RT, S) zu bestimmen, der mit dem Betriebszustand des Motorsystems in Beziehung steht, und wenigstens teilweise anhand des Wertes des wenigstens eines Zustandsparameters (RT, S) für die erste Regenerationsstufe eine Abgasbehandlungsvorrichtungs-Regenerationsmaßnahme aus wenigstens zwei Abgasbehandlungsvorrichtungs-Regenerationsmaßnahmen (235, 239) auszuwählen.

31. Motorsystem nach Anspruch 30, wobei der Motor wenigstens zwei Zylinder (2) umfasst und einer der Zustandsparameter ein Steuerparameter ist, der einem angeforderten Drehmoment (RT) des Motors entspricht oder damit in Beziehung steht.

32. Motorsystem nach Anspruch 31, wobei eine der Abgasbehandlungsvorrichtungs-Regenerationsmaßnahmen (235) das Verhindern einer Verbrennung in allen Zylindern (2) und das Steuern der Kraftstoffeinspritzmittel (11), derart, dass Kraftstoff in wenigstens einen der Zylinder (2) eingelassen wird, umfasst und eine weitere der Abgasbehandlungsvorrichtungs-Regenerationsmaßnahmen (239) das Verhindern einer Verbrennung in wenigstens einem, jedoch in weniger als allen Zylindern (2) und das Steuern der Kraftstoffeinspritzmittel (11), derart, dass Kraftstoff in wenigstens einen der Zylinder (2), in dem eine Verbrennung verhindert wird, eingelassen wird, umfasst.

33. Motorsystem nach einem der Ansprüche 30-32, wobei der Motor wenigstens zwei Zylinder (2) umfasst, wobei einer der Zustandsparameter die Motordrehzahl (S) ist und wobei eine der Abgasbehandlungsvorrichtungs-Regenerationsmaßnahmen (239) das Verhindern einer Verbrennung in wenigstens einem, jedoch in weniger als allen Zylindern (2) und das Steuern der Kraftstoffeinspritzmittel (11), so dass Kraftstoff in wenigstens einem der Zylinder (2), in dem eine Verbrennung verhindert wird, eingelassen wird, umfasst.

34. Motorsystem nach einem der Ansprüche 28-33, wobei das Motorsystem ferner einen stromabseitigen Gassensor (12) umfasst, der sich stromabwärts von oder wenigstens teilweise in der Abgasbehandlungsvorrichtung (8) befindet, wobei die Motorsteuereinheit (9) dazu ausgelegt ist, in der zweiten Regenerationsstufe wiederholt
- anhand von Signalen von dem stromabseitigen Gassensor (12) eine Abnahme des Sauerstoffgehalts stromabseitig von oder in der Abgasbehandlungsvorrichtung (8) zu detektieren und
- in Abhängigkeit von der Detektion der Abnahme des Sauerstoffgehalts den Lamdawert so zu steuern, dass er ansteigt.

35. Motorsystem nach Anspruch 34, wobei die Motorsteuereinheit (9) dazu ausgelegt ist, am Ende eines Zeitintervalls (Δr) mit niedrigem Sauerstoffgehalt, das der Detektion der Abnahme des Sauerstoffgehalts folgt, die Steuerung des Lamdawerts in der Weise auszuführen, dass er zunimmt.

36. Motorsystem nach Anspruch 35, wobei die Motorsteuereinheit (9) dazu ausgelegt ist, einen Luftdurchfluss in den wenigstens einen Zylinder zu bestimmen und das Zeitintervall (Δr) mit niedrigem Sauerstoffgehalt wenigstens teilweise in Abhängigkeit von dem Luftdurchfluss zu bestimmen.

37. Motorsystem nach Anspruch 36, wobei die Motorsteuereinheit (9) dazu ausgelegt ist, wenigstens teilweise anhand des Luftdurchflusses das Zeitintervall (Δr) mit niedrigem Sauerstoffgehalt einzustellen.

38. Motorsystem nach einem der Ansprüche 34-37, wobei die Motorsteuereinheit (9) dazu ausgelegt ist, in der zweiten Regenerationsstufe wiederholt
- anhand von Signalen von dem stromabseitigen Gassensor (12) eine Zunahme des Sauerstoffgehalts stromabseitig von oder in der ersten Abgasbehandlungsvorrichtung (8) zu detektieren und
- in Abhängigkeit von der Detektion der Zunahme des Sauerstoffgehalts den Lamdawert so zu steuern, dass er abnimmt.

39. Motorsystem nach Anspruch 38, wobei die Motorsteuereinheit (9) dazu ausgelegt ist, am Ende eines Zeitintervalls (Δh), das der Detektion der Zunahme des Sauerstoffgehalts folgt, die Steuerung des Lamdawerts in der Weise auszuführen, dass er abnimmt.

40. Motorsystem nach Anspruch 39, wobei die Motorsteuereinheit (9) dazu ausgelegt ist, einen Luftdurchfluss in dem wenigstens einen Zylinder zu bestimmen, wobei das Zeitintervall (Δh) mit hohem Sauerstoffgehalt wenigstens teilweise von dem Luftdurchfluss abhängt.

41. Motorsystem nach Anspruch 40, wobei die Motorsteuereinheit (9) dazu ausgelegt ist, wenigstens teilweise anhand des Luftdurchflusses das Zeitintervall (Δh) mit hohem Sauerstoffgehalt einzustellen.

42. Motorsystem nach einem der Ansprüche 38-41, wobei die Motorsteuereinheit (9) dazu ausgelegt ist, den Lamdawert in der Weise zu steuern, dass er um 1 oszilliert.

43. Motorsystem nach einem der Ansprüche 28-42, wobei die Abgasbehandlungsvorrichtung (8) eine erste Abgasbehandlungsvorrichtung (8) ist und das Motorsystem ferner eine zweite Abgasbehandlungsvorrichtung (82) umfasst, die sich stromabseitig von der ersten Abgasbehandlungsvorrichtung (8) befindet.

44. Motorsystem nach Anspruch 43, wobei sich die zweite Abgasbehandlungsvorrichtung (82) stromabseitig von dem stromabseitigen Gassensor (12) befindet.

45. Motorsystem nach einem der Ansprüche 28-44, wobei die Motorsteuereinheit (9) dazu ausgelegt ist, in der ersten Regenerationsstufe eine Kraftstoffeinspritz-Abgasbehandlungsvorrichtungs-Regenerationsmaßnahme zu steuern, wobei die Motorsteuereinheit (9) dazu ausgelegt ist, während der Kraftstoffeinspritz-Abgasbehandlungsvorrichtungs-Regenerationsmaßnahme eine Verbrennung in dem wenigstens einen Zylinder (2) zu verhindern und während der Kraftstoffeinspritz-Abgasbehandlungsvorrichtungs-Regenerationsmaßnahme die Kraftstoffeinspritzmittel (11) in der Weise zu steuern, dass Kraftstoff in wenigstens einen der Zylinder (2) eingelassen wird.

46. Motorsystem anch Anspruch 45, wobei der Motor Zündungsmittel (16) bei jedem Zylinder (2) umfasst, wobei die Motorsteuereinheit (9) dazu ausgelegt ist, die Zündungsmittel (16) während der Kraftstoffeinspritz-Abgasbehandlungsvorrichtungs-Regenerationsmaßnahme in der Weise zu steuern, dass eine Zündung verhindert wird, so dass eine Verbrennung in dem Zylinder (2), in den Kraftstoff eingelassen wird, verhindert wird.

47. Motorsystem nach einem der Ansprüche 45-46, wobei die Motorsteuereinheit (9) dazu ausgelegt ist, die Kraftstoffeinspritz-Abgasbehandlungsvorrichtungs-Regenerationsmaßnahme zuzulassen, falls das Vorhandensein wenigstens eines Zustands, der eine Kraftstoffeinspritzverhinderung angibt, bestimmt wird.

48. Motorsystem nach Anspruch 47, wobei die Motorsteuereinheit (9) dazu ausgelegt ist, für die Bestimmung des Vorhandenseins des Zustands, der eine Kraftstoffeinspritzverhinderung angibt, einen Wert eines Steuerparameters zu bestimmen, der einem angeforderten Drehmoment des Motors entspricht oder damit in Beziehung steht, und den bestimmten Steuerparameterwert mit einem Steuerparameterschwellenwert zu vergleichen, wobei die Bestimmung des Vorhandenseins eines Zustands, der eine Kraftstoffeinspritzverhinderung angibt, von dem Vergleich zwischen dem bestimmten Steuerparameterwert und dem Steuerparameterschwellenwert abhängt.

49. Motorsystem nach einem der Ansprüche 45-48, wobei die Motorsteuereinheit (9) dazu ausgelegt ist, die Luftdurchfluss-Steuermittel (10) in der Weise zu steuern, dass die Verbrennung in der Abgasbehandlungsvorrichtung (8) während der Kraftstoffeinspritz-Abgasbehandlungsvorrichtungs-Regenerationsmaßnahme gesteuert wird.

50. Motorsystem nach Anspruch 49, wobei die Motorsteuereinheit (9) dazu ausgelegt ist, die Luftdurchfluss-Steuermittel (10) in der Weise zu steuern, dass ein Ort oder ein Bereich einer maximalen Temperatur in der Abgasbehandlungsvorrichtung (8) gesteuert wird.

51. Motorsystem nach einem der Ansprüche 28-50, wobei die Motorsteuereinheit (9) dazu ausgelegt ist, in der ersten Regenerationsstufe eine Verbrennungsverhinderungs-Abgasbehandlungsvorrichtungs-Regenerationsmaßnahme zu steuern, wobei die Motorsteuereinheit (9) dazu ausgelegt ist, während der Verbrennungsverhinderungs-Abgasbehandlungsvorrichtungs-Regenerationsmaßnahme eine Verbrennung in wenigstens einem der Zylinder (2) zu verhindern und während der Verbrennungsverhinderungs-Abgasbehandlungsvorrichtungs-Regenerationsmaßnahme die Kraftstoffeinspritzmittel (11) in der Weise zu steuern, dass Kraftstoff in wenigstens einen der Zylinder (2), in dem eine Verbrennung verhindert wird, eingelassen wird.

52. Motorsystem nach Anspruch 51, wobei die Motorsteuereinheit (9) dazu ausgelegt ist, während der Verbrennungsverhinderungs-Abgasbehandlungsvorrichtungs-Regenerationsmaßnahme einen Wert eines Steuerparameters zu bestimmen, der einem angeforderten Drehmoment des Motors entspricht oder damit in Beziehung steht, und die Verbrennungsverhinderungs-Abgasbehandlungsvorrichtungs-Regenerationsmaßnahme in Abhängigkeit von dem Steuerparameterwert zu steuern.

53. Motorsystem nach Anspruch 52, wobei der Verbrennungsmotor wenigstens zwei Zylinder (2) umfasst und wobei die Motorsteuereinheit (9) dazu ausgelegt ist, während der Verbrennungsverhinderungs-Abgasbehandlungsvorrichtungs-Regenerationsmaßnahme und anhand der Steuerparameterbestimmung die Anzahl von Zylindern, in denen eine Verbrennung verhindert wird, zu bestimmen.

54. Motorsystem nach einem der Ansprüche 28-53, wobei das Motorsystem ferner Kraftstoffspeichermittel (20) und eine Kraftstoffdampf-Rückhalteeinrichtung (22) umfasst, wobei die Motorsteuereinheit (9) ferner dazu ausgelegt ist, in der ersten Regenerationsstufe eine Spülgas-Abgasbehandlungsvorrichtungs-Regenerationsmaßnahme zu steuern, wobei die Motorsteuereinheit (9) dazu ausgelegt ist, während der Spülgas-Abgasbehandlungsvorrichtungs-Regenerationsmaßnahme Ventilmittel (25) zu steuern, um Spülgas von der Kraftstoffdampf-Rückhalteeinrichtung (22) in wenigstens einen der Zylinder (2) einzulassen und um während der Spülgas-Abgasbehandlungsvorrichtungs-Regenerationsmaßnahme eine Verbrennung in wenigstens einem der Zylinder (2), in den Spülgas eingelassen wird, zu verhindern.

## Revendications

1. Procédé, pour un dispositif de traitement des gaz d'échappement (8) dans un système de moteur thermique comprenant un moteur à combustion interne, comprenant au moins un cylindre (2), une valeur lambda d'un mélange d'air et de carburant, fourni dans au moins l'un des cylindres, étant susceptible d'être commandée par une commande de moyens de commande d'écoulement d'air (10) et/ou de moyens d'injection de carburant (11) du moteur thermique, **caractérisé en ce que** le procédé comprend l'accomplissement d'une régénération du dispositif de traitement des gaz d'échappement, comprenant un premier stade de régénération, comprenant la commande du système de moteur thermique (235, 239), de manière à augmenter la température du dispositif de traitement des gaz d'échappement (8), et un deuxième stade de régénération, faisant suite au premier stade de régénération, le premier stade de régénération fournissant une préparation pour le deuxième stade de régénération, sous la forme d'une augmentation de la température du dispositif de traitement des gaz d'échappement, le deuxième stade de régénération comprenant l'accomplissement répétitif d'étapes de régénération (251) comprenant la commande de la valeur lambda, de manière qu'elle devienne inférieure à 1 et la commande de la valeur lambda de manière qu'elle devienne supérieure à 1.

2. Procédé selon la revendication 1, comprenant la détermination (231) d'une température (Teat) du dispositif de traitement des gaz d'échappement (8), et l'accomplissement du deuxième stade de régénération si la température du dispositif de traitement des gaz d'échappement (Teat) est supérieure à une valeur seuil de première température (T1).

3. Procédé selon l'une quelconque des revendications précédentes, comprenant la détermination d'une valeur d'au moins un paramètre d'état (RT, S) lié à l'état opérationnel du système de moteur thermique, et la sélection, basée au moins partiellement sur la valeur du au moins un paramètre d'état (RT, S), pour le premier stade de régénération, d'une disposition de régénération du dispositif de traitement des gaz d'échappement parmi au moins deux dispositions de régénération du dispositif de traitement des gaz d'échappement (235, 239).

4. Procédé selon la revendication 3, dans lequel le moteur thermique comprend au moins deux cylindres (2), et l'un des paramètres d'état est un paramètre de commande correspondant à, ou étant lié à, un couple (RT) requis du moteur thermique.

5. Procédé selon la revendication 4, dans lequel l'une des dispositions de régénération du dispositif de traitement des gaz d'échappement (235) comprend l'inhibition de toute combustion dans tous les cylindres (2), et la commande des moyens d'injection de carburant (11), de manière que du carburant soit admis à pénétrer dans au moins l'un des cylindres (2), et une autre des dispositions de régénération du dispositif de traitement des gaz d'échappement (239) comprend l'inhibition de toute combustion dans au moins l'un des cylindres (2), mais pas dans tous, et la commande des moyens d'injection de carburant (11), de manière que du carburant soit admis à pénétrer dans au moins l'un des cylindres (2) dans lequel toute combustion est inhibée.

6. Procédé selon l'une quelconque des revendications 3 à 5, dans lequel le moteur thermique comprend au moins deux cylindres (2), dans lequel l'un des paramètres d'état est le paramètre de vitesse de rotation du moteur thermique (S) et dans lequel l'une des dispositions de régénération du dispositif de traitement des gaz d'échappement (239) comprend l'inhibition de toute combustion dans au moins l'un des cylindres (2), mais pas dans tous, et la commande des moyens d'injection de carburant (11), de manière que du carburant soit admis à pénétrer dans au moins l'un des cylindres (2) dans lequel toute combustion est inhibée.

7. Procédé selon l'une quelconque des revendications précédentes, dans lequel le système de moteur thermique comprend en outre un capteur de gaz aval (12), situé en aval, ou au moins partiellement à l'intérieur, du dispositif de traitement des gaz d'échappement (8), et dans lequel les étapes de régénération répétées du deuxième stade de régénération comprennent :
- la détection, basée sur des signaux provenant du capteur de gaz aval (12), d'une diminution de la teneur en oxygène en aval, ou à l'intérieur, du dispositif de traitement des gaz d'échappement (8), et
- la commande, en fonction de la détection de la diminution de la teneur en oxygène, de la valeur lambda dans le sens d'une augmentation.

8. Procédé selon la revendication 7, dans lequel l'étape de commande de la valeur lambda dans le sens d'une augmentation est accomplie à la fin d'un intervalle de temps à faible teneur en oxygène (Δr), faisant suite à la détection de la diminution de la teneur en oxygène.

9. Procédé selon la revendication 8, comprenant la détermination d'un écoulement d'air vers au moins un cylindre, l'intervalle de temps à faible teneur en oxygène (Δr) dépendant au moins partiellement de l'écoulement d'air.

10. Procédé selon la revendication 9, comprenant l'ajustement, d'après au moins partiellement l'écoulement d'air, de l'intervalle de temps à faible teneur en oxygène (Δr).

11. Procédé selon l'une quelconque des revendications 7 à 10, dans lequel les étapes de régénération répétées du deuxième stade de régénération comprennent :
- la détection, basée sur des signaux provenant du capteur de gaz aval (12), d'une augmentation de la teneur en oxygène en aval, ou à l'intérieur, du dispositif de traitement des gaz d'échappement (8), et
- la commande, en fonction de la détection de l'augmentation de la teneur en oxygène, de la valeur lambda dans le sens d'une diminution.

12. Procédé selon la revendication 11, dans lequel l'étape de commande de la valeur lambda dans le sens d'une diminution est accomplie à la fin d'un intervalle de temps à haute teneur en oxygène (Δh), faisant suite à la détection de l'augmentation de la teneur en oxygène.

13. Procédé selon la revendication 12, comprenant la détermination d'un écoulement d'air vers au moins un cylindre, l'intervalle de temps à haute teneur en oxygène (Δh) dépendant au moins partiellement de l'écoulement d'air.

14. Procédé selon la revendication 13, comprenant l'ajustement, d'après au moins partiellement l'écoulement d'air, de l'intervalle de temps à haute teneur en oxygène (Δh).

15. Procédé selon l'une quelconque des revendications 11 à 14, dans lequel les étapes de régénération répétées sont accomplies de manière que la valeur lambda oscille autour de 1.

16. Procédé selon l'une quelconque des revendications précédentes, dans lequel le dispositif de traitement des gaz d'échappement (8) est un premier dispositif de traitement des gaz d'échappement (8), et le système de moteur thermique comprend un deuxième dispositif de traitement des gaz d'échappement (82), situé en aval du premier dispositif de traitement des gaz d'échappement (8).

17. Procédé selon la revendication 16, dans lequel le deuxième dispositif de traitement des gaz d'échappement (82) est situé en aval du capteur de gaz aval (12).

18. Procédé selon l'une quelconque des revendications précédentes, dans lequel le premier stade de régénération comprend une disposition de régénération du dispositif de traitement des gaz d'échappement agissant sur l'injection de carburant, comprenant l'inhibition de toute combustion dans le au moins un cylindre (2), et la commande des moyens d'injection de carburant (11), de manière que du carburant soit admis à pénétrer dans au moins l'un des cylindres (2).

19. Procédé selon la revendication 18, dans lequel l'étape d'inhibition de toute combustion comprend la commande de moyens d'allumage (16) au niveau du cylindre (2), de manière que toute combustion soit inhibée.

20. Procédé selon l'une quelconque des revendications 18 à 19, dans lequel la disposition de régénération du dispositif de traitement des gaz d'échappement agissant sur l'injection de carburant est accomplie si l'existence d'au moins un état indicatif d'une inhibition de l'injection de carburant est déterminé.

21. Procédé selon la revendication 20, dans lequel l'étape de détermination de l'existence d'un état, indicatif d'une inhibition de l'injection de carburant, comprend la détermination d'une valeur d'un paramètre de commande correspondant à, ou étant lié à, un couple requis du moteur thermique, et la comparaison de la valeur de paramètre de commande déterminée à une valeur seuil de paramètre de commande, la détermination de l'existence d'un état, indicatif d'une inhibition de l'injection de carburant, dépendant de la comparaison entre la valeur de paramètre de commande déterminée et de la valeur seuil de paramètre de commande.

22. Procédé selon l'une quelconque des revendications 18 à 21, comprenant la commande des moyens de commande d'écoulement d'air (10), de manière à commander la combustion dans le dispositif de traitement des gaz d'échappement (8) durant la disposition de régénération du dispositif de traitement des gaz d'échappement agissant sur l'injection de carburant.

23. Procédé selon la revendication 22, dans lequel la commande de la combustion dans le dispositif de traitement des gaz d'échappement (8) comprend la commande d'un emplacement ou d'une région à température maximale dans le dispositif de traitement des gaz d'échappement (8).

24. Procédé selon l'une quelconque des revendications précédentes, dans lequel le premier stade de régénération comprend une disposition de régénération du dispositif de traitement des gaz d'échappement agissant par inhibition de la combustion, comprenant l'inhibition de toute combustion dans au moins l'un des cylindres (2), et la commande des moyens d'injection de carburant (11), de manière que du carburant soit admis à pénétrer dans au moins l'un des cylindres (2) dans lequel toute combustion est inhibée.

25. Procédé selon la revendication 24, comprenant la détermination, durant la disposition de régénération du dispositif de traitement des gaz d'échappement agissant par inhibition de la combustion, d'une valeur d'un paramètre de commande correspondant à, ou étant lié à, un couple requis du moteur thermique, la disposition de régénération du dispositif de traitement des gaz d'échappement agissant par inhibition de la combustion dépendant de la détermination de la valeur de paramètre de commande.

26. Procédé selon la revendication 25, dans lequel le moteur à combustion interne comprend au moins deux cylindres (2), et le nombre de cylindres dans lesquels la combustion est inhibée dépend de la détermination de la valeur de paramètre de commande.

27. Procédé selon l'une quelconque des revendications précédentes, dans lequel le système de moteur thermique comprend en outre des moyens de stockage de carburant (20), et un organe de retenue de vapeur de carburant (22), le premier stade de régénération comprenant une disposition de régénération du dispositif de traitement des gaz d'échappement agissant par les gaz de purge, comprenant l'admission de gaz de purge provenant de l'organe de retenue de vapeur de carburant (22) en au moins l'un des cylindres (2), et l'inhibition de toute combustion dans au moins l'un des cylindres (2) dans lequel du gaz de purge a été admis à pénétrer.

28. Système de moteur thermique comprenant un moteur à combustion interne, comprenant au moins un cylindre (2), un premier dispositif de traitement des gaz d'échappement (8), et une unité de commande de moteur thermique (9) adaptée pour commander, par une commande de moyens de commande d'écoulement d'air (10) et/ou de moyens d'injection de carburant (11) du moteur thermique, une valeur lambda d'un mélange d'air et de carburant, fourni en au moins l'un des cylindres, **caractérisé en ce que** l'unité de commande de moteur thermique (9) est adaptée pour commander une régénération du dispositif de traitement des gaz d'échappement, comprenant un premier stade de régénération et un deuxième stade de régénération, faisant suite au premier stade de régénération, l'unité de commande de moteur thermique (9) étant adaptée pour commander, dans le premier stade de régénération, le système de moteur thermique, de manière à fournir une préparation pour le deuxième stade de régénération, sous la forme d'une augmentation de la température du dispositif de traitement des gaz d'échappement (8), et pour répétitivement commander, dans le deuxième stade de régénération, la valeur lambda de manière qu'elle devienne inférieure à 1 et de manière qu'elle devienne supérieure à 1.

29. Système de moteur thermique selon la revendication 28, dans lequel l'unité de commande de moteur thermique (9) est adaptée pour déterminer une température (Teat) du dispositif de traitement des gaz d'échappement (8), et permettre l'accomplissement du deuxième stade de régénération si la température du dispositif de traitement des gaz d'échappement (Teat) est supérieure à une valeur seuil de première température (T1).

30. Système de moteur thermique selon l'une quelconque des revendications 28 à 29, dans lequel l'unité de commande de moteur thermique (9) est adaptée pour déterminer une valeur d'au moins un paramètre d'état (RT, S) lié à l'état opérationnel du système de moteur thermique, et sélectionner, en se basant au moins partiellement sur la valeur du au moins un paramètre d'état (RT, S), pour le premier stade de régénération, une disposition de régénération du dispositif de traitement des gaz d'échappement parmi au moins deux dispositions de régénération du dispositif de traitement des gaz d'échappement (235, 239).

31. Système de moteur thermique selon la revendication 30, dans lequel le moteur thermique comprend au moins deux cylindres (2), et l'un des paramètres d'état est un paramètre de commande correspondant à, ou étant lié à, un couple (RT) requis du moteur thermique.

32. Système de moteur thermique selon la revendication 31, dans lequel l'une des dispositions de régénération du dispositif de traitement des gaz d'échappement (235) comprend l'inhibition de toute combustion dans tous les cylindres (2), et la commande des moyens d'injection de carburant (11), de manière que du carburant soit admis à pénétrer dans au moins l'un des cylindres (2), et une autre des dispositions de régénération du dispositif de traitement des gaz d'échappement (239) comprend l'inhibition de toute combustion dans au moins l'un des cylindres (2), mais pas dans tous, et la commande des moyens d'injection de carburant (11), de manière que du carburant soit admis à pénétrer dans au moins l'un des cylindres (2) dans lequel toute combustion est inhibée.

33. Système de moteur thermique selon l'une quelconque des revendications 30 à 32, dans lequel le moteur thermique comprend au moins deux cylindres (2), dans lequel l'un des paramètres d'état est le paramètre de vitesse de rotation de moteur thermique (S) et dans lequel l'une des dispositions de régénération du dispositif de traitement des gaz d'échappement (239) comprend l'inhibition de toute combustion dans au moins l'un des (11), de manière que du carburant soit admis à pénétrer dans au moins l'un des cylindres (2) dans lequel toute combustion est inhibée.

34. Système de moteur thermique selon l'une quelconque des revendications 28 à 33, dans lequel le système de moteur thermique comprend en outre un capteur de gaz aval (12), situé en aval, ou au moins partiellement à l'intérieur, du dispositif de traitement des gaz d'échappement (8), l'unité de commande de moteur thermique (9) étant adaptée pour répétitivement, dans le deuxième stade de régénération, effectuer :
- la détection, basée sur des signaux provenant du capteur de gaz aval (12), d'une diminution de la teneur en oxygène en aval, ou à l'intérieur, du dispositif de traitement des gaz d'échappement (8), et
- la commande, en fonction de la détection de la diminution de la teneur en oxygène, de la valeur lambda dans le sens d'une augmentation.

35. Système de moteur thermique selon la revendication 34, dans lequel l'unité de commande de moteur thermique (9) est adaptée pour effectuer la commande de la valeur lambda dans le sens d'une augmentation, à la fin d'un intervalle de temps à faible teneur en oxygène (Δr), faisant suite à la détection de la diminution de la teneur en oxygène.

36. Système de moteur thermique selon la revendication 35, dans lequel l'unité de commande de moteur thermique (9) est adaptée pour effectuer la détermination d'un écoulement d'air vers au moins un cylindre, et pour déterminer l'intervalle de temps à faible teneur en oxygène (Δr) dépendant au moins partiellement de l'écoulement d'air.

37. Système de moteur thermique selon la revendication 36, dans lequel l'unité de commande de moteur thermique (9) est adaptée pour effectuer l'ajustement, d'après au moins partiellement l'écoulement d'air, de l'intervalle de temps à faible teneur en oxygène (Δr).

38. Système de moteur thermique selon l'une quelconque des revendications 34 à 37, dans lequel l'unité de commande de moteur thermique (9) est adaptée pour répétitivement, dans le deuxième stade de régénération, effectuer :
- la détection, basée sur des signaux provenant du capteur de gaz aval (12), d'une augmentation de la teneur en oxygène en aval, ou à l'intérieur, du dispositif de traitement des gaz d'échappement (8), et
- la commande, en fonction de la détection de l'augmentation de la teneur en oxygène, de la valeur lambda dans le sens d'une diminution.

39. Système de moteur thermique selon la revendication 38, dans lequel l'unité de commande de moteur thermique (9) est adaptée pour effectuer la commande de la valeur lambda dans le sens d'une diminution, à la fin d'un intervalle de temps à haute teneur en oxygène (Δh), faisant suite à la détection de l'augmentation de la teneur en oxygène.

40. Système de moteur thermique selon la revendication 39, dans lequel l'unité de commande de moteur thermique (9) est adaptée pour effectuer la détermination d'un écoulement d'air vers au moins un cylindre, l'intervalle de temps à haute teneur en oxygène (Δh) dépendant au moins partiellement de l'écoulement d'air.

41. Système de moteur thermique selon la revendication 40, dans lequel l'unité de commande de moteur thermique (9) est adaptée pour effectuer l'ajustement, d'après au moins partiellement l'écoulement d'air, de l'intervalle de temps à haute teneur en oxygène (Δh).

42. Système de moteur thermique selon l'une quelconque des revendications 38 à 41, dans lequel l'unité de commande de moteur thermique (9) est adaptée pour commander la valeur lambda, de manière qu'elle oscille autour de 1.

43. Système de moteur thermique selon l'une quelconque des revendications 28 à 42, dans lequel le dispositif de traitement des gaz d'échappement (8) est un premier dispositif de traitement des gaz d'échappement (8), et le système de moteur thermique comprend en outre un deuxième dispositif de traitement des gaz d'échappement (82), situé en aval du premier dispositif de traitement des gaz d'échappement (8).

44. Système de moteur thermique selon la revendication 43, dans lequel le deuxième dispositif de traitement des gaz d'échappement (82) est situé en aval du capteur de gaz

45. Système de moteur thermique selon l'une quelconque des revendications 28 à 44, dans lequel l'unité de commande de moteur thermique (9) est adaptée pour commander, dans le premier stade de régénération, une disposition de régénération du dispositif de traitement des gaz d'échappement agissant sur l'injection de carburant, l'unité de commande de moteur thermique (9) étant adaptée pour, durant la disposition de régénération du dispositif de traitement des gaz d'échappement agissant sur l'injection de carburant, inhiber toute combustion dans le au moins un cylindre (2), et pour commander, durant la disposition de régénération du dispositif de traitement des gaz d'échappement agissant sur l'injection de carburant, les moyens d'injection de carburant (11), de manière que du carburant soit admis à pénétrer dans au moins l'un des cylindres (2).

46. Système de moteur thermique selon la revendication 45, dans lequel le moteur thermique comprend des moyens d'allumage (16) au niveau de chaque cylindre (2), l'unité de commande de moteur thermique (9) étant adaptée pour commander les moyens d'allumage (16), durant la disposition de régénération du dispositif de traitement des gaz d'échappement agissant sur l'injection de carburant, de manière que toute combustion soit inhibée dans le cylindre (2) dans lequel du carburant est admis à pénétrer.

47. Système de moteur thermique selon l'une quelconque des revendications 45 à 46, dans lequel l'unité de commande de moteur thermique (9) est adaptée pour permettre l'accomplissement de la disposition de régénération du dispositif de traitement des gaz d'échappement agissant sur l'injection de carburant, si l'existence d'au moins un état indicatif d'une inhibition de l'injection de carburant est déterminé.

48. Système de moteur thermique selon la revendication 47, dans lequel l'unité de commande de moteur thermique (9) est adaptée pour déterminer, pour la détermination de l'état indicatif d'une inhibition de l'injection de carburant, d'une valeur d'un paramètre de commande correspondant à, ou étant lié à, un couple requis du moteur thermique, et pour comparer la valeur du paramètre de commande déterminée à une valeur seuil du paramètre de commande, la détermination de l'existence d'un état, indicatif d'une inhibition de l'injection de carburant, dépendant de la comparaison entre la valeur du paramètre de commande déterminée et de la valeur seuil du paramètre de commande.

49. Système de moteur thermique selon l'une quelconque des revendications 45 à 48, dans lequel l'unité de commande de moteur thermique (9) est adaptée pour effectuer la commande des moyens de commande d'écoulement d'air (10), de manière à commander la combustion dans le dispositif de traitement des gaz d'échappement (8) durant la disposition de régénération du dispositif de traitement des gaz d'échappement agissant sur l'injection de carburant.

50. Système de moteur thermique selon la revendication 48, dans lequel l'unité de commande de moteur thermique (9) est adaptée pour commander les moyens de commande d'écoulement d'air (10), de manière à commander un emplacement ou une région à température maximale dans le dispositif de traitement des gaz d'échappement (8).

51. Système de moteur thermique selon l'une quelconque des revendications 28 à 50, dans lequel l'unité de commande de moteur thermique (9) est adaptée pour commander, le premier stade de régénération, une disposition de régénération du dispositif de traitement des gaz d'échappement agissant par inhibition de la combustion, l'unité de commande de moteur thermique (9) étant adaptée pour, durant la disposition de régénération du dispositif de traitement des gaz d'échappement agissant par inhibition de la combustion, assurer l'inhibition de toute combustion dans au moins l'un des cylindres (2), et assurer la commande des moyens d'injection de carburant (11), de manière que du carburant soit admis à pénétrer dans au moins l'un des cylindres (2) dans lequel toute combustion est inhibée.

52. Système de moteur thermique selon la revendication 51, dans lequel l'unité de commande de moteur thermique (9) est adaptée pour, durant la disposition de régénération du dispositif de traitement des gaz d'échappement agissant par inhibition de la combustion, effectuer la détermination d'une valeur d'un paramètre de commande correspondant à, ou étant lié à, un couple requis du moteur thermique, et pour commander la disposition de régénération du dispositif de traitement des gaz d'échappement agissant par inhibition de la combustion en fonction de la valeur de paramètre de commande.

53. Système de moteur thermique selon la revendication 52, dans lequel le moteur à combustion interne comprend au moins deux cylindres (2), et l'unité de commande de moteur thermique (9) est adaptée pour, durant la disposition de régénération du dispositif de traitement des gaz d'échappement agissant par inhibition de la combustion et d'après la détermination de la valeur de paramètre de commande, déterminer le nombre de cylindres dans lesquels la combustion est inhibée.

54. Système de moteur thermique selon l'une quelconque des revendications 28 à 53, dans lequel le système de moteur thermique comprend en outre des moyens de stockage de carburant (20), et un organe de retenue de vapeur de carburant (22), l'unité de commande de moteur thermique (9) étant en outre adaptée pour, dans le premier stade de régénération, commander une disposition de régénération du dispositif de traitement des gaz d'échappement agissant par les gaz de purge, l'unité de commande de moteur thermique (9) étant adaptée pour, durant la disposition de régénération du dispositif de traitement des gaz d'échappement agissant par les gaz de purge, commander des moyens de soupape (25), de manière à permettre de purger du gaz provenant de l'organe de retenue de vapeur de carburant (22), dans au moins l'un des cylindres (2), et, durant la disposition de régénération du dispositif de traitement des gaz d'échappement agissant par les gaz de purge, d'inhiber toute combustion dans au moins l'un des cylindres (2) dans lequel du gaz de purge a été admis à pénétrer.
